(19) Europäisches Patentamt / European Patent Office / Office européen des brevets

(11) **EP 4 170 390 B1**

(12) **EUROPEAN PATENT SPECIFICATION**

(45) Date of publication and mention
of the grant of the patent:
**10.12.2025 Bulletin 2025/50**

(21) Application number: **21826237.6**

(22) Date of filing: **05.02.2021**

(51) International Patent Classification (IPC):
**G01S 19/44** *(2010.01)*     **G01S 19/21** *(2010.01)*
**G01S 19/11** *(2010.01)*

(52) Cooperative Patent Classification (CPC):
**G01S 19/02; G01S 19/43; G01S 19/54; Y02D 30/70**

(86) International application number:
**PCT/CN2021/075537**

(87) International publication number:
**WO 2021/253844 (23.12.2021 Gazette 2021/51)**

(54) **NAVIGATION METHOD AND SYSTEM EMPLOYING LOW-ORBIT BROADBAND INTERNET CONSTELLATION**

NAVIGATIONSVERFAHREN UND -SYSTEM MIT BREITBANDIGER INTERNETKONSTELLATION MIT NIEDRIGER ORBITRATE

PROCÉDÉ ET SYSTÈME DE NAVIGATION UTILISANT UNE CONSTELLATION INTERNET À LARGE BANDE À ORBITE BASSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.06.2020 CN 202010566922**

(43) Date of publication of application:
**26.04.2023 Bulletin 2023/17**

(73) Proprietor: **Xi'an Institute Of Space Radio Technology**
**Xi'an, Shaanxi 710199 (CN)**

(72) Inventors:
• **MENG, Yansong**
**Xi'an, Shaanxi 710199 (CN)**
• **YAN, Tao**
**Xi'an, Shaanxi 710199 (CN)**
• **WANG, Ying**
**Xi'an, Shaanxi 710199 (CN)**
• **BIAN, Lang**
**Xi'an, Shaanxi 710199 (CN)**

• **TIAN, Ye**
**Xi'an, Shaanxi 710199 (CN)**
• **LI, Tian**
**Xi'an, Shaanxi 710199 (CN)**

(74) Representative: **Rooney, John-Paul**
**Withers & Rogers LLP**
**2 London Bridge**
**London SE1 9RA (GB)**

(56) References cited:
EP-A1- 3 805 796      CN-A- 109 001 763
CN-A- 109 001 763     CN-A- 109 061 675
CN-A- 109 061 675     CN-A- 109 283 554
CN-A- 110 794 425     CN-A- 111 781 621
US-A1- 2003 067 409

• IANNUCCI PETER A ET AL: "Economical Fused LEO GNSS", 2020 IEEE/ION POSITION, LOCATION AND NAVIGATION SYMPOSIUM (PLANS), IEEE, 20 April 2020 (2020-04-20), pages 426 - 443, XP033778809, DOI: 10.1109/PLANS46316.2020.9110140

## Description

The present application claims priority to Chinese Patent Application No.202010566922.4, titled "NAVIGATION METHOD AND SYSTEM EMPLOYING LOW-ORBIT BROADBAND INTERNET CONSTELLATION", filed on June 19, 2020 with the Chinese Patent Office.

## FIELD

The present disclosure relates to the technical field of satellite navigation, and in particular to a navigation method and a navigation system based on a low-orbit broadband internet constellation.

## BACKGROUND

At present, positioning, navigation and timing (PNT) services are provided mainly based on the global navigation satellite system (GNSS). Since the GNSS system is mainly designed for open sky scenarios, GNSS signals have week receiving power on ground, narrow bandwidths, and poor service availability under occlusion and attenuation conditions, especially in the interference/jamming environment. Therefore, how to improve the anti-jamming ability of the GNSS directly impact on the performance of PNT services. The low-orbit broadband internet constellation formed by multiple satellites is rapidly developing, and the anti-jamming ability may be improved by providing PNT services based on the low-orbit broadband Internet constellation.

At present, in order to improve the anti-jamming ability of the GNSS signals, all beams formed by multiple sets of satellite multi-beam antennas are controlled to point to the target region. Thus, the signal receiving power is improved by focusing power to a small region, thereby improving the anti-jamming ability. However, with the process of improving the signal receiving power on ground by focusing power to the small region according to the conventional technology, the coverage region of the GNSS signal is reduced. Therefore, how to improve the signal receiving power on ground and thereby improve the anti-jamming ability of the GNSS signal with ensuring coverage of a navigation system based on the low-orbit broadband internet constellation is a problem urgently to be solved. The patent EP3805796A1 provides a navigation augmentation method and system, the method includes: broadcasting, by satellites of a Low Earth Orbit (LEO) constellation, navigation direct signals and navigation augmentation information; performing, by a user receiver, precise positioning, speed measurement and timing according to the navigation direct signals of navigation satellites, the navigation direct signals of the LEO satellites and the navigation augmentation information broadcasted by the LEO satellites. The patent CN109061675A discloses a navigation method based on a satellite communication signal. The satellite communication signal adopts a time division/frequency division/space division hybrid system. The document XP33778809A presents and analyzes a concept of operations for so-called fused LEO GNSS both in terms of positioning performance and in terms of the economy of its use of constellation resources of transmitters, bandwidth, and time.

## SUMMARY

For the problem of poor anti-jamming ability of the navigation signal according to the conventional technology, a navigation method and a navigation system based on a low-orbit broadband internet constellation are provided according to the present disclosure. In the present disclosure, the second navigation signal and the first communication signal are transmitted by using shared spectrum resources and a shared transmission channel, that is, a satellite may transmit a navigation signal to a terminal by using a communication spectrum and a communication channel. Since the bandwidth of the communication spectrum is much wider than the bandwidth of the spectrum of the conventional GNSS signal, the bandwidth of the navigation signal is improved according to the present disclosure, thereby improving the anti-jamming ability of the signal compared with the conventional GNSS signal. In addition, due to that the terminal with broadband communication signals has a high antenna gain, and the signal receiving power is improved, thereby further improving the anti-jamming ability of the navigation signal.

In a first aspect, a navigation method based on a low-orbit broadband internet constellation is provided according to an embodiment of the present disclosure. The navigation method includes: receiving a satellite navigation broadcast message or a precise message transmitted by a ground gateway station, and generating a first navigation signal based on the satellite navigation broadcast message or the precise message; generating a first communication signal based on a preset communication payload, generating a second navigation signal based on the first communication signal and the first navigation signal, where the second navigation signal and the first communication signal are transmitted by using shared spectrum resources and a shared transmission channel; and transmitting the second navigation signal to a terminal through a preset communication resource, where the terminal performs positioning, navigation and timing based on the second navigation signal.

In the solution according to the present disclosure, a satellite navigation broadcast message or a precise message transmitted by a ground gateway station is received, a first navigation signal is generated based on the navigation broadcast message or a GNSS signal, a first navigation signal is generated based on a preset communication payload, and a second navigation signal is generated based on the first communication signal and the first navigation signal. The second navigation signal and the first communication signal are transmitted by using shared spectrum resources and a shared transmission channel. The second navigation signal is transmitted to a terminal through a preset communication resource, so that the terminal performs positioning, navigation and timing based on the second navigation signal. The second navigation signal and the first communication signal are transmitted by using shared spectrum resources and a shared transmission channel, that is, the satellite may transmit a navigation signal to the terminal by using a communication spectrum and a communication channel. Since the bandwidth of the communication spectrum is much wider than the bandwidth of the spectrum of the conventional navigation GNSS signal, the bandwidth of the navigation signal is improved, thereby further improving the anti-jamming ability of the navigation signal.

In an embodiment, the first communication signal includes a service signal and a signaling signal, the first communication signal includes a Ka-band communication signal or a Ku-band communication signal, and the first navigation signal includes a continuous Ka-band navigation signal and/or a continuous L-band navigation signal.

In an embodiment, in a case that both the first communication signal and the first navigation signal include a Ka-band signal, the generating a second navigation signal based on the first communication signal and the first navigation signal includes: obtaining a baseband signal or an intermediate frequency signal based on the first navigation signal; and fusing the baseband signal or the intermediate frequency signal with the first communication signal to obtain the second navigation signal.

In an embodiment, the generating a second navigation signal based on the first communication signal and the first navigation signal further includes: receiving a signal transmitted by the ground gateway station, determining a reception time instant and a transmission time instant of the signal, and determining a first signal propagation delay based on the reception time instant and the transmission time instant; transmitting the first communication signal to the ground gateway station, and receiving a second signal propagation delay determined by the ground gateway station based on the first communication signal; determining clock difference information between the constellation and the ground gateway station based on the first signal propagation delay and the second signal propagation delay; and generating the second navigation signal based on the first communication signal and the clock difference information.

In an embodiment, the second navigation signal includes at least one of: a continuous navigation signal that is obtained by fusing the baseband signal or the intermediate frequency signal with the service signal and is represented as Ka_N; a continuous navigation signal that is obtained by fusing the baseband signal or the intermediate frequency signal with the signaling signal and is represented as Ka_S; the continuous L-band navigation signal that is represented as L_N; a pulse navigation signal that is obtained by fusing the baseband signal or the intermediate frequency signal with a communication signal and is represented as Ka_P; and a second communication signal that is represented as Ka_C and carries the clock difference information.

In the solution according to the embodiment of the present disclosure, due to the wide bandwidth of the Ka-band, the continuous navigation signal Ka_N is transmitted in the Ka-band to improve anti-jamming ability, and due to a Ka terminal having a high antenna gain, the carrier-to-noise ratio of the signal is improved. A conduction and fusion high-power pulse signal Ka_P may be transmitted to achieving "pulse and continuous", thereby improving the signal power. A high-power communication signal Ka_C may be transmitted to further equivalently improve the power of the navigation signal. In addition, a radio resource management function may be performed to allocate power to a navigation signal in a case that there is no communication service, so as to directly improve the power of the navigation signal.

In an embodiment, the transmitting the second navigation signal to a terminal through a preset communication resource includes: transmitting the Ka_P to the terminal through the communication resource in a multi-carousel manner; or coding and grouping the Ka_N in a chip-level coding manner to obtain multiple chip groups, and transmitting different chip groups to the terminal through different beams in the communication resource; or transmitting the second navigation signal with continuous wide coverage to the terminal through a communication narrow beam.

In a second aspect, a navigation method based on a low-orbit broadband internet constellation is provided according to an embodiment of the present disclosure. The navigation method includes: receiving second navigation signals transmitted by at least four satellites in the constellation, where each of the second navigation signals and a first communication signal generated by a satellite corresponding to the second navigation signal based on a preset communication payload are transmitted by using shared spectrum resources and a shared transmission channel; and determining pseudo ranges between the satellites and a terminal, and carrier phase observation values of the satellites based on the second navigation signals, and performing positioning, navigation and timing on the terminal based on the pseudo ranges and the carrier phase observation values.

The navigation method further includes: determining position information of each of antennas in an ultra-short baseline antenna system arranged on the terminal, and establishing a body coordinate system of the terminal based on the position information, where the ultra-short baseline antenna system includes at least two antennas; determining a carrier phase observation equation based on second navigation signals received by the antennas from two of the satellites, and performing double difference calculation by using the carrier phase observation equation to determine a carrier phase double difference value, and a relationship between position vectors of the two satellites, a baseline vector between the antennas in the ultra-short baseline antenna system and a double-difference carrier integer ambiguity; obtaining a set of relational equations based on the second navigation signals transmitted by the at least four satellites and the relationship, calculating a double-difference carrier integer ambiguity in the relational equations by using a preset integer ambiguity resolution algorithm, calculating the baseline vector between the antennas in the ultra-short baseline antenna system by bringing the calculated double-difference carrier integer ambiguity into the relational equations; and calculating a posture parameter of the terminal based on the baseline vector, where the posture parameter includes a pitch angle, a yaw angle and a roll angle.

In a third aspect, a navigation system based on a low-orbit broadband internet constellation is provided according to an embodiment of the present disclosure. The navigation system includes the constellation, a ground gateway station and at least one terminal. The ground gateway station is configured to transmit a satellite navigation broadcast message to the constellation. The constellation includes multiple satellites operating in different orbit, and is configured to: receive the satellite navigation broadcast message or a GNSS signal transmitted by the ground gateway station, generate a first navigation signal based on the navigation broadcast message or the GNSS signal; generate a first communication signal based on a preset communication payload, generate a second navigation signal based on the first communication signal and the first navigation signal, where the second navigation signal and the first communication signal are transmitted by using shared spectrum resources and a shared transmission channel; and transmit the second navigation signal to the at least one terminal through a preset communication resource. The at least one terminal is configured to perform positioning, navigation and timing based on the second navigation signal.

In an embodiment, each of the at least one terminal is arranged with a communication antenna for a Ka-band signal or is arranged with a communication antenna for a Ka-band signal and a navigation antenna for an L-band signal, where the communication antenna for the Ka-band signal is configured to receive the second navigation signal.

In the solution according to the embodiment of the present disclosure, a navigation system based on low-orbit broadband internet constellation is established. The navigation system is a GNSS augmentation system and independently provides services of positioning, navigation and timing. In addition, the navigation system may interoperate with the GNSS to provide PNT services.

In a fourth aspect, a navigation device based on low-orbit broadband internet constellation is provided according to an embodiment of the present disclosure. The navigation device includes: a receiving unit, a generating unit, and a transmitting unit. The receiving unit is configured to: receive a satellite navigation message or a precise ephemeris transmitted by the ground gateway station, and generate a first navigation signal based on the navigation message or the precise ephemeris. The generating unit is configured to generate a first communication signal based on a preset communication payload, and generate a second navigation signal based on the first communication signal and the first navigation signal, where the second navigation signal and the first communication signal are transmitted by using shared spectrum resources and a shared transmission channel. The transmitting unit is configured to transmit the second navigation signal to a terminal through a preset communication resource, so that the terminal performs positioning, navigation and timing based on the second navigation signal.

In an embodiment, the first communication signal includes a service signal and a signaling signal, the first communication signal includes a Ka-band communication signal or a Ku-band communication signal, and the first navigation signal includes a continuous Ka-band navigation signal and/or a continuous L-band navigation signal.

In an embodiment, the generating unit is configured, in a case that both the first communication signal and the first navigation signal include a Ka-band signal, to: obtain a baseband signal or an intermediate frequency signal based on the first navigation signal, and fuse the baseband signal or the intermediate frequency signal with the first communication signal to obtain the second navigation signal.

In an embodiment, the generating unit is further configured to: receive a signal transmitted by the ground gateway station, determine a reception time instant and a transmission time instant of the signal, and determine a first signal propagation delay based on the reception time instant and the transmission time instant; transmit the first communication signal to the ground gateway station and receive a second signal propagation delay determined by the ground gateway station based on the first communication signal; determine clock difference information between the constellation and the ground gateway station based on the first signal propagation delay and the second signal propagation delay; and generate the second navigation signal based on the first communication signal and the clock difference information.

In an embodiment, the second navigation signal includes at least one of: a continuous navigation signal that is obtained by fusing the baseband signal or the intermediate frequency signal with the service signal and is represented as Ka_N; a continuous navigation signal that is obtained by fusing the baseband signal or the intermediate frequency signal with the signaling signal and is represented as Ka_S; the continuous L-band navigation signal that is represented as L_N; a pulse navigation signal that is obtained by fusing the baseband signal or the intermediate frequency signal with a communication signal and is represented as Ka_P; and a second communication signal that is represented as Ka_C and carries the clock difference information.

In an embodiment, the transmitting unit is configured to: transmit the Ka_P to the terminal through the communication resource in a multi-carousel manner; or code and group the Ka_N in a chip-level coding manner to obtain multiple chip groups, and transmit different chip groups to the terminal through different beams in the communication resource; or transmit the second navigation signal with continuous wide coverage to the terminal through a communication narrow beam.

In a fifth aspect, a navigation device based on a low-orbit broadband internet constellation is provided according to an embodiment of the present disclosure. The navigation device includes: a receiving unit and a positioning unit. The receiving unit is configured to receive second navigation signals transmitted by at least four satellites in the constellation, where each of the second navigation signals and a first communication signal generated by a satellite corresponding to the second navigation signal based on a preset communication payload are transmitted by using shared spectrum resources and a shared transmission channel. The positioning unit is configured to determine pseudo ranges between the satellites and a terminal, and carrier phase observation values of the satellites based on the second navigation signals, and perform positioning on the terminal based on the pseudo ranges and the carrier phase observation values.

In an embodiment, the navigation device further includes a determining unit. The determining unit is configured to: determine position information of each of antennas in an ultra-short baseline antenna system arranged on the terminal, and establish a body coordinate system of the terminal based on the position information, where the ultra-short baseline antenna system includes at least two antennas; determine a carrier phase observation equation based on second navigation signals received by the antennas from two of the satellites, and perform double difference calculation by using the carrier phase observation equation to determine a carrier phase double difference value, and a relationship between position vectors of the two satellites, a baseline vector between the antennas in the ultra-short baseline antenna system and a double-difference carrier integer ambiguity; obtain a set of relational equations based on the second navigation signals transmitted by the at least four satellites and the relationship, calculate a double-difference carrier integer ambiguity in the relational equations by using a preset integer ambiguity resolution algorithm, calculate the baseline vector between the antennas in the ultra-short baseline antenna system by bringing the calculated double-difference carrier integer ambiguity into the relational equations; and calculate a posture parameter of the terminal based on the baseline vector, where the posture parameter includes a pitch angle, a yaw angle and a roll angle.

In a sixth aspect, a satellite is provided according to an embodiment of the present disclosure. The satellite includes: a memory and a processer. The memory stores instructions executed by at least one processer. The processer is configured to execute the instructions stored in the memory to perform the navigation method described in to the first aspect.

In a seventh aspect, a terminal is provided according to an embodiment of the present disclosure. The terminal includes: a memory and a processer. The memory stores instructions executed by at least one processer. The processer is configured to execute the instructions stored in the memory to perform the navigation method described in the second aspect.

In an eighth aspect, a computer-readable storage medium is provided according to an embodiment of the present disclosure. The computer-readable storage medium stores computer instructions. The computer instructions, when executed on a computer, cause the computer to perform the method described in the first aspect and the method described in the second aspect.

## BRIEF DESCRIPTION OF THE DRAWINGS

Figure 1 is a flow chart of a navigation method based on a low-orbit broadband internet constellation according to an embodiment of the present disclosure;

Figure 2 is a schematic diagram of a frame structure of a KA_P signal according to an embodiment of the present disclosure;

Figure 3 is a schematic diagram of a measured posture of an ultra-short baseline based on a Ka_N signal according to an embodiment the present disclosure;

Figure 4 is a schematic structural diagram of a navigation system based on a low-orbit broadband internet constellation according to an embodiment of the present disclosure;

Figure 5 is a schematic structural diagram of a navigation device based on a low-orbit broadband internet constellation according to an embodiment of the present disclosure;

Figure 6 is a schematic structural diagram of a navigation device based on a low-orbit broadband internet constellation according to an embodiment of the present disclosure;

Figure 7 is a schematic structural diagram of a navigation device based on a low-orbit broadband internet constellation according to an embodiment of the present disclosure;

Figure 8 is a schematic structural diagram of a satellite according to an embodiment of the present disclosure; and

Figure 9 is a schematic structural diagram of a terminal according to an embodiment of the present disclosure.

## DETAILED DESCRIPTION

In order to better understand the above technical solutions, the technical solutions of the present disclosure are described in detail below in conjunction with the drawings and specific embodiments. It should be understood that features of the embodiments and the embodiments of the present disclosure are intended to illustrate in detail the technical solutions of the present disclosure, rather than to limit the technical solutions of the present disclosure. Without conflict, the embodiments of the present disclosure and the technical features in the embodiments may be combined with each other.

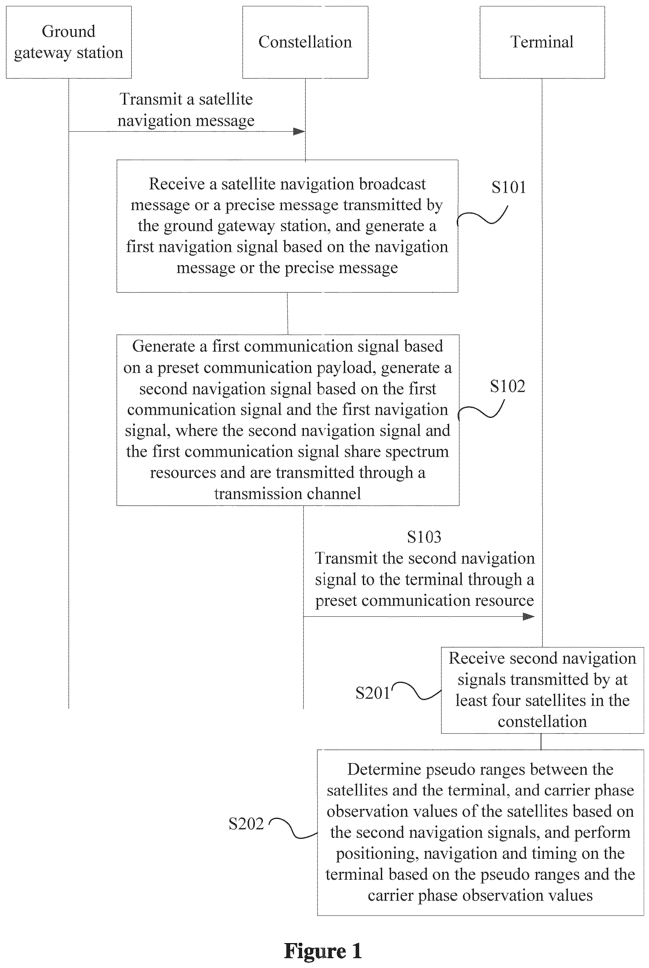

Hereinafter, a navigation method based on a low-orbit broadband internet constellation according to an embodiment of the present disclosure is further described in detail in conjunction with the drawings in the specification. The method may include the following steps 101 to 103 (A flow chart of the method is shown in Figure 1).

In step 101, a satellite navigation broadcast message or a precise ephemeris transmitted by a ground gateway station is received, and a first navigation signal is generated based on the navigation broadcast message or the precise ephemeris.

In the solution according to the embodiment of the present disclosure, a satellite in the constellation may be connected to the ground gateway station through a feeder link. After the connection is established, the constellation may receive a navigation message transmitted by the ground gateway station. The navigation message includes satellite ephemeris, almanac, a correction parameter of a satellite clock, a parameter of an ionospheric delay model, and the like. It should be understood that in the solutions according to the embodiments of the present disclosure, the constellation includes multiple satellites.

Further, a satellite-borne GNSS signal receiver is arranged in the constellation. The receiver may receive a GNSS signal transmitted by a GNSS system. In a case that the ground gateway station does not transmit ephemeris data of the constellation to the satellites, the constellation autonomously generates a navigation message based on the GNSS signal and a preset message generation rule, and then generates the first navigation signal based on the navigation message.

In step 102, a first communication signal is generated based on a preset communication payload, and a second navigation signal is generated based on the first communication signal and the first navigation signal. The second navigation signal and the first communication signal are transmitted by using shared spectrum resources and a shared transmission channel.

In the solution according to the embodiment of the present disclosure, each of the satellites in the constellation is arranged with a communication payload, and the communication payload may generate the first communication signal. The first communication signal is used for communication between the constellation and the ground gateway station. Each of the satellites in the constellation is arranged with a navigation payload, and the navigation payload may generate the first navigation signal based on the navigation message. Each of the first communication signal and the first navigation signal may include various types of signals. A preferred signal is taken as an example for description below.

In an embodiment, the first communication signal includes a service signal and a signaling signal, and the first communication signal includes a Ka-band communication signal or a Ku-band communication signal. The first navigation signal includes a continuous Ka-band navigation signal and/or a continuous L-band navigation signal.

In the solution according to the embodiment of the present disclosure, a satellite transmits a communication signal in a Ka-band or in a Ku-band. The communication signal is transmitted in a frequency division, time division, and multi-beam manner. The beams include signaling beams and service beams. $N_{beam}$ represents the number of the service beams, and $N_{beam}$ 22. Downlink service signals of the user are transmitted through service beams. The signaling beams are global width beams, and are configured to initially establish a link between the terminal and the satellite. $BW_{ka}$ represents a downlink bandwidth of the user, and $BW_{ka} \geq 100MHz$. The downlink bandwidth is equally divided into $N_{BW}$ sub-bands. For each of the service beams, the frequency band includes one or more sub-bands. Each of the service beams supports $N_{user}$ users. $T_F$ represents a minimum time slot in a time domain.

Further, in the solution according to the embodiment of the present disclosure, the constellation generates the second navigation signal based on the first communication signal and the first navigation signal in multiple manners. A preferred manner is taken as an example for description below.

In an embodiment, in a case that both the first communication signal and the first navigation signal include a Ka-band signal, the second navigation signal is generated based on the first communication signal and the first navigation signal by: obtaining a baseband signal or an intermediate frequency signal based on the first navigation signal, and fusing the baseband signal or the intermediate frequency signal with the first communication signal to obtain the second navigation signal.

In an embodiment, the second navigation signal is generated based on the first communication signal and the first navigation signal by: receiving a signal transmitted by the ground gateway station, determining a reception time instant and a transmission time instant of the signal, and determining a first signal propagation delay based on the reception time instant and the transmission time instant; transmitting the first communication signal to the ground gateway station, and receiving a second signal propagation delay determined by the ground gateway station based on the first communication signal; determining clock difference information between the constellation and the ground gateway station based on the first signal propagation delay and the second signal propagation delay; and generating the second navigation signal based on the first communication signal and the clock difference information.

In the solution according to the embodiment of the present disclosure, the ground gateway station transmits a signal to the constellation. After receiving the signal, the constellation determines a reception time instant and a transmission time instant of the signal. The reception time instant is a time instant at which the constellation receives the signal, and the transmission time instant is a time instant at which the ground gateway station transmits the signal. The constellation determines the first signal propagation delay based on the reception time instant and the transmission time instant. The first signal propagation delay is determined by using the following equation:

$$T_{e \to s} = T_1^S - T_{1,e} = \|\boldsymbol{p}_1^s - \boldsymbol{p}_e\| + (\varDelta t^s - \varDelta t_e) + \left(tg_1^s - tg_{1,e}\right) + I_1 + t_{1,\text{sagnac}}$$

where $T_{e \to s}$ represents the first signal propagation delay, $T_1^S$ represents a ground clock time instant when the ground gateway station transmits a signal, $T_{1,e}$ represents a satellite clock time instant when the satellite receives the signal, $\boldsymbol{p}_1^S$ represents a coordinate vector of the satellite at the time instant $T_1^S$, $\boldsymbol{p}_e$ represents a coordinate vector of the ground gateway station in ECEF, $\varDelta t^s$ represents a preset satellite clock difference, $\varDelta t_e$ represents a preset clock difference of the ground gateway station, $tg_1^s$ represents a preset hardware delay of the satellite receiving a signal, $tg_{1,e}$ represents a preset hardware delay of the ground gateway station transmitting a signal, $I_1$ represents a preset ionospheric and tropospheric delay, and $t_{1,\text{sagnac}}$ represents a preset effect delay.

Further, the constellation transmits a communication signal to the ground gateway station. After receiving the communication signal, the ground gateway station determines a satellite clock time instant at which the satellite transmits the communication signal and a ground clock time instant at which the ground gateway station receives the communication signal, and calculates the second signal propagation delay based on the satellite clock time instant at which the satellite transmits the communication signal and the ground clock time instant at which the ground gateway station receives the communication signal. The second signal propagation delay is calculated by using the following equation:

$$T_{s \to e} = T_{2,e} - T_2^S = \|\boldsymbol{p}_e - \boldsymbol{p}_2^s\| + (\varDelta t_e - \varDelta t^s) + \left(tg_{2,e} - tg_2^s\right) + I_2 + t_{2,\text{sagnac}}$$

where $T_{s \to e}$ represents the second signal propagation delay, $T_{2,e}$ represents the ground clock time instant at which the ground gateway station receives the communication signal, $T_2^S$ represents the satellite clock time instant at which the satellite transmits the communication signal, and $\boldsymbol{p}_2^S$ represents a coordinate vector of the satellite at the time instant $T_2^S$.

Further, after calculating the second signal propagation delay, the ground gateway station transmits the second signal propagation delay to the constellation. The constellation obtains clock difference information between the constellation and the ground gateway station based on the first signal propagation delay and the second signal propagation delay. The clock difference information is calculated by the following equation:

$$\Delta t^s - \Delta t_e = \frac{T_{e\to s} - T_{s\to e}}{2} + \frac{\|\boldsymbol{p}_e - \boldsymbol{p}_2^s\| - \|\boldsymbol{p}_1^s - \boldsymbol{p}_e\|}{2} +$$

$$\frac{(tg_{2,e} - tg_2^s) - (tg_1^s - tg_{1,e})}{2} + \frac{I_2 - I_1}{2} + \frac{t_{2,\text{sagnac}} - t_{1,\text{sagnac}}}{2}$$

where ($\Delta t^s$ - $\Delta t_e$) represents the clock difference information.

Further, in an embodiment, the second navigation signal includes at least one of: a continuous navigation signal that is obtained by fusing the baseband signal or the intermediate frequency signal with the service signal and is represented as Ka_N; a continuous navigation signal that is obtained by fusing the baseband signal or the intermediate frequency signal with the signaling signal and is represented as Ka_S; the continuous L-band navigation signal that is represented as L_N; a pulse navigation signal that is obtained by fusing the baseband signal or the intermediate frequency signal with a communication signal and is represented as Ka_P; and a second communication signal that is represented as Ka_C and carries the clock difference information. The second communication signal is a cooperative communication signal.

In the solution according to the embodiment of the present disclosure, each of the signals Ka_N, Ka_S and Ka_C may share a spectrum with the communication signal and is transmitted through a communication channel. The signal Ka_P occupies a part of time slots, spectrum and power resources of the communication signal.

In step 103, the second navigation signal is transmitted to a terminal through a preset communication resource, so that the terminal performs navigation and positioning based on the second navigation signal.

In the solution according to the embodiment of the present disclosure, after generating the second navigation signal, it is required for the constellation to transmit the second navigation signal to the terminal through a preset communication frequency band resource. Since the second navigation signal may include at least one type of signal, the constellation transmits the second navigation signal to the terminal in multiple manners. A preferred manner is taken as an example for description below.

In an embodiment, the second navigation signal is transmitted to the terminal through the preset communication resource by: transmitting the signal Ka_P to the terminal through the communication resource in a multi-carousel manner; or coding and grouping the signal Ka_N in a chip-level coding manner to obtain multiple chip groups, and transmitting different chip groups to the terminal through different beams in the communication resource; or transmitting the second navigation signal with continuous wide coverage to the terminal through a communication narrow beam.

In order to facilitate understanding of the process of transmitting the second navigation signal to the terminal by the constellation, the process of transmitting the first continuous navigation signal Ka_N, the process of transmitting the second continuous navigation signal Ka_S, the process of transmitting the second communication signal Ka_C and the process of transmitting the pulse navigation signal Ka_P are described below.

1. First continuous navigation signal Ka_N

In the solution according to the embodiment of the present disclosure, the baseband signal or the intermediate frequency signal is generated based on the first navigation signal, and the baseband signal or the intermediate frequency signal is fused with a service signal in Ka-band to obtain the first continuous navigation signal. The first continuous navigation signal is a signal in Ka-band.

Further, after obtaining the first continuous navigation signal, the constellation transmits the first continuous navigation signal through a radio frequency transmission channel in Ka-band. In transmitting the first continuous navigation signal, the constellation may continuously transmit the first continuous navigation signal through multiple service beams. The first continuous signals transmitted through different beams may include a same ranging code sequence or different ranging code sequences, which is not limited herein.

In the continuous transmission through multiple service beams, the multiple service beams may be chip-level hopping beams, and it is only required to generate one Ka_N baseband signal. The baseband signal may be obtained by using the following equation:

$$s_{Ka-N,baseband}(t) = d_{Ka-N}(t)c_{Ka-N}(t)$$

where $s_{Ka-N,baseband}(t)$ represents the Ka_N baseband signal, $d_{Ka-N}(t)$ represents a preset satellite navigation message, and $c_{Ka-N}(t)$ represents a preset ranging code.

In transmitting the Ka_N signal, the ranging codes are grouped with $N_{chip}$ chips as one group, where $N_{chip} \geq 1$. Different chip groups are transmitted through different beams. In a case that the first continuous navigation signal is transmitted i through n $N_{Ka-N}$ beams where $n \leq N_{KA-N} \leq N_{beam}$, a first continuous navigation signal in an n-th beam may be obtained by using the following equation:

$$s_{Ka-N}^n(t) = \sqrt{2P_{Ka-N}^n} d_{Ka-N}^n(t) c_{Ka-N}^n(t) \cos\left(2\pi f_{Ka-N}^n t + \theta_{0,Ka-N}^n\right)$$

where $s_{Ka-N}^n(t)$ represents the first continuous navigation signal in the n-th beam, $P_{Ka-N}^n$ represents a power of the first continuous navigation signal, $d_{Ka-N}^n(t)$ represents a preset satellite navigation message, $c_{Ka-N}^n(t)$ represents a preset ranging code, $f_{Ka-N}^n$ represents a preset carrier center frequency of the service beam, and $\theta_{0,Ka-N}^n$ represents a preset initial carrier phase of the service beam.

Further, in the solution according to the embodiment of the present disclosure, carrier center frequencies of different beams may be the same or different, and a signal bandwidth may be a bandwidth of the entire communication resources. In a case that the signal bandwidth is the bandwidth of the entire communication resources, it is required to generate multiple first continuous navigation signals.

2. Second continuous navigation signal Ka_S

In the solution according to the embodiment of the present disclosure, the baseband signal or the intermediate frequency signal is generated based on the first navigation signal, and the baseband signal or the intermediate frequency signal is fused with a signaling signal in Ka-band to obtain the second continuous navigation signal. The second continuous navigation signal is a signal in Ka-band.

Further, after generating the second continuous navigation signal, the constellation transmits the second continuous navigation signal through a radio frequency transmission channel in Ka-band. In transmitting the second continuous navigation signal, the constellation may transmit the second continuous navigation signal through a global width beam. The global width beam is a signaling beam. The second continuous navigation signal may be obtained by using the following equation:

$$s_{Ka-S}(t) = \sqrt{2P_{Ka-S}} d_{Ka-S}(t) c_{Ka-S}(t) \cos\left(2\pi f_{Ka-S} t + \theta_{0,Ka-S}\right)$$

where $s_{Ka-S}(t)$ represents the second continuous navigation signal, $P_{Ka-S}$ represents a power of the second continuous navigation signal, $d_{Ka-S}(t)$ represents a preset satellite navigation message, $c_{Ka-S}(t)$ represents a preset ranging code, $f_{Ka-S}$ represents a preset carrier center frequency of the signaling beam, and $\theta_{0,Ka-S}$ represents a preset initial carrier phase of the signaling beam.

In the solution according to the embodiment of the present disclosure, in a case that there are multiple signaling beams, second continuous navigation signals transmitted through different signaling beams may include a same ranging code or different ranging codes, which is not limited herein.

3. Second communication signal Ka_C

In the solution according to the embodiment of the present disclosure, the communication signal transmitted by the constellation is a burst signal. That is, there may be no communication signal or multiple communication signals transmitted through in a beam. A bandwidth, a time slot and a power of each of the communication signals is adjustable. The communication signal may be modulated in multiple modulation manners, such as a high-order modulation QAM manner or an APSK modulation manner. Specifically, a j-th second communication signal transmitted through an n-th beam may be obtained by using the following equation:

$$s_{Ka-C}^{n,j}(t) = \sqrt{P_{Ka-C}^{n,j}} \begin{pmatrix} I_{Ka-C}^{n,j}(t) \, cos\left(2\pi f_{Ka-C}^{n,j} t + \theta_{0,Ka-C}^{n,j}\right) - \\ Q_{Ka-C}^{n,j}(t) \, sin\left(2\pi f_{Ka-C}^{n,j} t + \theta_{0Ka-C}^{n,j}\right) \end{pmatrix}$$

where $s_{Ka-C}^{n,j}(t)$ represents the second communication signal, $P_{Ka-C}^{n,j}$ represents a power of the second communication signal, $I_{Ka-C}^{n,j}(t)$ represents an *I* branch baseband signal of the second communication signal, $Q_{Ka-C}^{n,j}(t)$ represents a Q branch baseband signal of the second communication signal, $f_{Ka-C}^{n,j}$ represents a center frequency of the second communication signal, and $\theta_{0Ka-C}^{n,j}$ represents an initial carrier phase of the second communication signal.

4. Pulse navigation signal Ka_P

In the solution according to the embodiment of the present disclosure, the constellation may occupy a part of time slots and frequency resources of a communication signal to transmit the pulse navigation signal Ka_P. In transmitting the pulse navigation signal Ka_P, the constellation may transmit the pulse navigation signal by hopping between multiple beams, and the pulse navigation signal Ka_P may be modulated in a BPSK modulation manner or a QPSK modulation manner to obtain a modulated signal Ka_P. A frame of the modulated signal Ka_P includes a continuous wave (CW), a PRN code for ranging, and a PRN code of modulated satellite navigation message data. Specifically, a length of a frame of the modulated signal Ka_P may be calculated by using the following equation:

$$T_{Ka-P} = T_{CW} + T_{pilot} + T_{data}$$

where $T_{Ka-P}$ represents the length of the frame of the modulated signal Ka_P and is equal to an integer multiple of a minimum time slot $T_F$ of the communication signal, $T_{CW}$ represents a length of a continuous wave, $T_{pilot}$ represents a length of the PRN code for ranging, and $T_{data}$ represents a length of the PRN code of the modulated satellite navigation message data.

Further, a Ka_P baseband signal is obtained by using the following equation:

$$s_{Ka-P,baseband}(t) = d_{Ka-P}(t)c_{Ka-P}(t)$$

where $s_{Ka-P,baseband}(t)$ represents a baseband signal of the pulse navigation signal. In a case that $0 \leq t < T_{CW}$, $d_{Ka-P}(t)c_{Ka-P}(t) \equiv 1$ or $d_{Ka-P}(t)c_{Ka-P}(t) \equiv -1$, representing a frame header of a continuous wave (CW). In a case that $T_{CW} \leq t < T_{CW} + T_{pilot}$, $d_{Ka-P}(t) \equiv 1$, and $c_{Ka-P}(t)$ represents a ranging PRN code. In a case that $T_{CW} + T_{pilot} \leq t \leq T_{Ka-P}$, $d_{Ka-P}(t)$ represents a modulated low-speed message, and $c_{Ka-P}(t)$ represents a data PRN code.

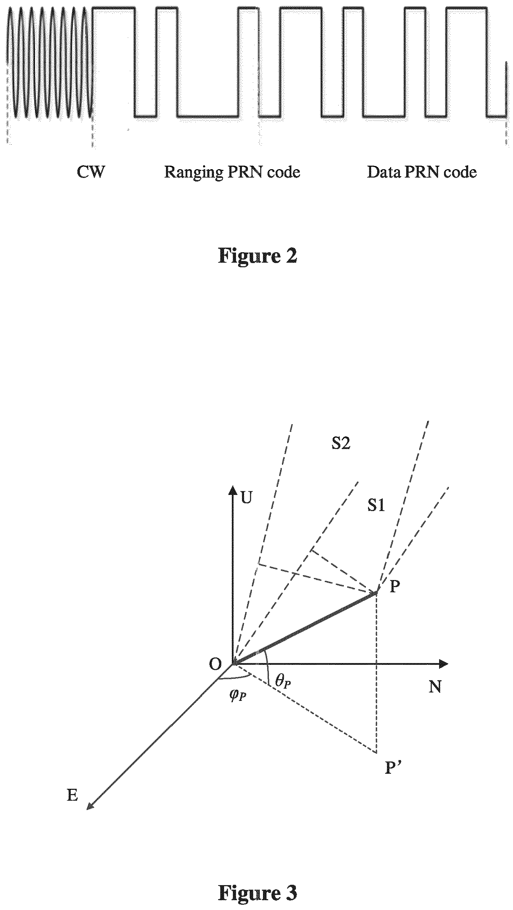

Reference is made to Figure 2, which shows a schematic diagram of a frame structure of a KA_P signal. It can be seen from Figure 2 that a Ka_P signal frame includes a frame header of a continuous wave (CW), a ranging PRN code and a data PRN code.

Further, in transmitting the pulse navigation signal Ka_P, the constellation may transmit the Ka_P signal by polling between multiple beams. $T_{beam}$ represents a time period in which the Ka_P signal stays at a single beam. $T_{beam}$ is an integer multiple of a minimum time slot $T_F$, and $T_{beam} \geq T_{Ka-P}$. In a case that the Ka_P signal is transmitted through $N_{beam}$ beams, the Ka_P signal may be transmitted polling between the $N_{beam}$ beams, and a duty ratio in a single beam is equal to $T_{Ka-P} / (N_{beam} \cdot T_{beam})$. Alternatively, the Ka_P signal may be transmitted by polling between some of the $N_{beam}$ beams, and multiple Ka_P signals may be transmitted simultaneously.

Further, in the solution according to the embodiment of the present disclosure, the second navigation signal further includes a navigation signal in L-band. The navigation signal in L-band is a continuous wave, and has a structure similar to the structure of the conventional GNSS signal. The navigation signal in L-band may be represented as L_N. The constellation may modulate the L_N signal directly in a spread spectrum manner to obtain a modulated signal. The modulated signal includes a satellite navigation message, a preset ranging code and a carrier. The modulated signal may be compatible with the conventional GNSS signal, thereby increasing the number of the navigation signals and shortening the convergence time of precise positioning. The modulated signal may be received and processed together with the GNSS signal. The L_N signal may be transmitted at one frequency, two frequencies, or three frequencies. The frequency may be selected in the L frequency band of the conventional GNSS or in a mobile communication frequency band ranging from 1518MHz to 1525MHz. An L_N signal at a *j*-th frequency may be obtained by using the following equation:

$$s_{L-N}^{j}(t) = \sqrt{2P_{L-N}^{j}} d_{L-N}^{j}(t) c_{L-N}^{j}(t) \cos\left(2\pi f_{L-N}^{j} t + \theta_{0,L-N}^{j}\right)$$

where $s_{L-N}^{j}(t)$ represents the L_N signal at the j-th frequency, $P_{L-N}^{j}$ represents a power of the L_N signal, $d_{L-N}^{j}(t)$ represents a preset satellite navigation message and may be a broadcast message, a precise ephemeris or a GNSS augmentation message, $c_{L-N}^{j}(t)$ represents a preset ranging code, $f_{L-N}^{j}$ represents a frequency of the L_N signal, and $\theta_{0,L-N}^{j}$ represents an initial carrier phase of the L_N signal.

Further, in generating the second navigation signal, the constellation may synthesize the Ka_N signal, the Ka_P signal and the Ka_C signal to obtain a synthesized signal and transmit the synthesized signal through a radio frequency transmission channel in Ka-band. The signals may be synthesized in a digital domain, or be synthesized at an analog intermediate frequency by using a combiner. In a case that the Ka_N signal is compatible with the Ka_C signal in a beam, if there is a communication service, it is required to configure a power spectrum of the Ka_N signal to be $\Delta p$dB lower than a power spectrum of the Ka_C signal to avoid affecting the communication service, where $\Delta p \geq 15$; and if there is no communication service, the power of the KA_C signal is allocated to the KA_N signal by using a radio resource management function to increase the power of the navigation signal.

In the solutions according to the embodiments of the present disclosure, a satellite navigation broadcast message or a precise ephemeris transmitted by a ground gateway station is received, and a first navigation signal is generated based on the navigation broadcast message or the GNSS signal. Then, a first communication signal is generated based on a preset communication payload, and a second navigation signal is generated based on the first communication signal and the first navigation signal. The second navigation signal and the first communication signal are transmitted by using shared spectrum resources and a shared transmission channel. The second navigation signal is transmitted to a terminal through a preset communication resource, so that the terminal performs positioning, navigation and timing based on the second navigation signal. The second navigation signal and the first communication signal are transmitted by using shared spectrum resources and a shared transmission channel, that is, a satellite may transmit a navigation signal to a terminal by using a communication spectrum and a communication channel. Since the bandwidth of the communication spectrum is wider than the bandwidth of the spectrum of the conventional navigation GNSS signal, the bandwidth of the navigation signal is improved according to the present disclosure. To jam with the entire navigation signal, the power of the jamming signal is required to be distributed over the frequency band of the entire navigation signal. A wider bandwidth of the navigation signal indicates a lower power spectrum under the same jamming signal power. To achieve a similar jamming effect to the GNSS signal, it is required to increase the power of the jamming signal. That is, compared with the conventional GNSS signal, the anti-jamming ability of the broadband navigation signal is improved according to the present disclosure. In addition, due to that the terminal with broadband communication signals has a high antenna gain, the signal reception power is improved, thereby further improving the anti-jamming ability of the navigation signal.

As shown in Figure 2, a navigation method based on a low-orbit broadband internet constellation is provided according to an embodiment of the present disclosure. The navigation method includes the following steps 201 and 202.

In step 201, second navigation signals transmitted by at least four satellites in the constellation are received. Each of the second navigation signals and a first communication signal generated by a satellite corresponding to the second navigation signal based on a preset communication payload are transmitted by using shared spectrum resources and a shared transmission channel.

In step 202, pseudo ranges between the satellites and a terminal and carrier phase observation values of the satellites are determined based on the second navigation signals, and positioning is performed on the terminal based on the pseudo ranges and the carrier phase observation values.

In the solution according to the embodiment of the present disclosure, after determining the second navigation signal, it is required for the constellation to transmit the second navigation signal to a terminal. The terminal may perform positioning, navigation, timing, posture measurement and link building based on the received second navigation signal. The second navigation signal includes one or more of an L_N signal, a Ka_N signal, a Ka_S signal, a Ka_P signal, a Ka_C signal and a GNSS signal.

In the solution according to the embodiment of the present disclosure, in a case, the terminal may be arranged with a Ka-band antenna; in another case, the terminal may be arranged with a Ka-band antenna and an L-band antenna. The process of the terminal performing navigation and positioning based on the second navigation signals in the above two cases is described below.

1. The terminal is arranged with a Ka-band antenna and an L-band antenna.

In the case that the terminal is arranged with the Ka-band antenna and the L-band antenna, in addition to receiving at least one of the Ka_N signal, the Ka_S signal, the Ka_P signal and the Ka_C signal, the terminal may further receive the L_N signal. After receiving the L_N signal, the terminal performs navigation and positioning based on the L_N signal as described below.

After receiving the L_N signal, the terminal analyzes the L_N signal to determine a pseudo range and a carrier phase observation value of a satellite. The pseudo range and the carrier phase observation value are determined by using the following equations:

$$\begin{cases} P_{L-N}^{j} = \rho + (t_r - t_s) + I_{L-N}^{j} + T_{L-N}^{j} + B_{L-N}^{j,P} + \varepsilon_{L-N}^{j,P} \\ \Phi_{L-N}^{j} = \rho + (t_r - t_s) - I_{L-N}^{j} + T_{L-N}^{j} + B_{L-N}^{j,\Phi} + \lambda_{L-N}^{j} N_{L-N}^{j} + \varepsilon_{L-N}^{j,\Phi} \end{cases}$$

where $P_{L-N}^{j}$ represents the pseudo range, $\Phi_{L-N}^{j}$ represents the carrier phase observation value, $\rho$ represents a geometric distance from the satellite to the terminal, $I_{L-N}^{j}$ represents an ionospheric delay, $T_{L-N}^{j}$ represents a tropospheric delay, $B_{L-N}^{j,P}$ represents a hardware delay of a code, $B_{L-N}^{j,\Phi}$ represents a hardware delay of the carrier phase, $\lambda_{L-N}^{j}$ represents a carrier wavelength of the L_N signal, $\varepsilon_{L-N}^{j,P}$ represents other error terms of the pseudo range, and $\varepsilon_{L-N}^{j,\Phi}$ represents other error terms of the carrier phase observation value.

In the solution according to the embodiment of the present disclosure, the L_N signal has a structure similar to the structure of the conventional GNSS signal. In a case that the terminal may receive L_N signals from four or more satellites, the terminal may perform positioning and timing. The navigation message transmitted by the ground gateway station includes a broadcast message and a precise ephemeris. The broadcast message has an orbit and a clock difference with low accuracies, an error above a meter level and a short update period, and is used for positioning calculation based on a pseudo code. The precise ephemeris has an orbit and a clock difference with high accuracies, an error at a centimeter level and a long update period, and is used for precise positioning calculation. In a case there is a precise ephemeris, a fast precise positioning calculation may be performed based on the L_N signal. Since the frequency of the L_N signal is close to the frequency of the conventional GNSS signal, the terminal may receive both the GNSS signal and the L_N signal simultaneously, thereby improving the convergence speed of the precise positioning calculation.

2. The terminal is arranged with a Ka-band antenna.

The terminal may receive at least one of the Ka_N signal, the Ka_S signal, the Ka_P signal and the Ka_C signal, and may perform positioning, navigation, timing and posture measurement based on the received Ka_N signal, the Ka_S signal, the Ka_P signal or the Ka_C signal. The Ka_P signal is a high-power pulse signal. In a case that the terminal operates in a stationary state or in a quasi-stationary state, the terminal may only receive the Ka_P signal, and perform positioning and timing based on a Doppler positioning technology.

The Ka_N signal is a continuous broadband navigation signal, and has a high signal power. The terminal has an antenna with large gain. The Ka_N signal has a strong anti-jamming ability, and thus may be used in a jamming environment. Description is provided by taking the terminal receiving a Ka_N signal as an example. The pseudo range and the carrier phase observation value are obtained by using the following equations based on the Ka_N signal :

$$\begin{cases} P_{Ka-N}^n = \rho + (t_r - t_s) + I_{Ka-N}^n + T_{Ka-N}^n + B_{Ka-N}^{n,P} + \varepsilon_{Ka-N}^{n,P} \\ \Phi_{Ka-N}^n = \rho + (t_r - t_s) - I_{Ka-N}^n + T_{Ka-N}^n + B_{Ka-N}^{n,\Phi} + \lambda_{Ka-N}^n N_{Ka-N}^n + \varepsilon_{Ka-N}^{n,\Phi} \end{cases}$$

where $P_{Ka-N}^n$ represents the pseudo range, and $\Phi_{Ka-N}^n$ represents the carrier phase observation value.

In a case that the terminal may receive Ka_N signals from four or more satellites, the terminal may perform positioning and timing. The Ka_N signal is a broadband signal, has a bandwidth more than 10 times of the bandwidth of the GNSS signal, and has a carrier-to-noise ratio higher than 30dB, a high measurement accuracy and a good anti-jamming ability can be achieved with the Ka_N signal. In a case that there is a precise ephemeris, a real-time decimeter-level positioning accuracy or a real-time centimeter-level positioning accuracy may be achieved based on the pseudocode positioning, which is close to the performance of the precise point based on the GNSS signal.

For example, in a case that the terminal receives signals from four satellites, pseudo ranges from the terminal to the four satellites are measured based on the pseudo code, and the following equations are obtained:

$$\begin{cases} P_{Ka-N,1}^n = \sqrt{\left(x_r - x^{s1}\right)^2 + \left(y_r - y^{s1}\right)^2 + \left(z_r - z^{s1}\right)^2} + t_r - t_{s1} + I_{Ka-N,1}^n + T_{Ka-N,1}^n + B_{Ka-N,1}^{n,P} \\ P_{Ka-N,2}^n = \sqrt{\left(x_r - x^{s2}\right)^2 + \left(y_r - y^{s2}\right)^2 + \left(z_r - z^{s1}\right)^2} + t_r - t_{s2} + I_{Ka-N,2}^n + T_{Ka-N,2}^n + B_{Ka-N,2}^{n,P} \\ P_{Ka\ N,3}^n = \sqrt{\left(x_r - x^{s3}\right)^2 + \left(y_r - y^{s3}\right)^2 + \left(z_r - z^{s3}\right)^2} + t_r - t_{s3} + I_{Ka\ N,3}^n + T_{Ka\ N,3}^n + B_{Ka\ N,3}^{n,P} \\ P_{Ka-N,4}^n = \sqrt{\left(x_r - x^{s4}\right)^2 + \left(y_r - y^{s4}\right)^2 + \left(z_r - z^{s4}\right)^2} + t_r - t_{s4} + I_{Ka-N,4}^n + T_{Ka-N,4}^n + B_{Ka-N,4}^{n,P} \end{cases}$$

where $P_{Ka-N,i}^n$ , i = 1,2,3,4 represents a pseudo range from the terminal to an i-th satellite and is known; ($x^{si}$,$y^{si}$,$z^{si}$), i-1,2,3,4 represents coordinates of a position of the i-th satellite, is obtained from a navigation message and is known; $t_{si}$, i = 1,2,3,4 represents a clock difference of the i-th satellite, is obtained from the navigation message and is known; $I_{Ka-N,i}^n$ represents an ionospheric delay from the terminal to the i-th satellite, is corrected based on the navigation message or an existing model and is known; $T_{Ka-N,i}^n$ represents a tropospheric delay from the terminal to the i-th satellite, is corrected based on the navigation message or an existing model and is known; $B_{Ka-N,i}^{n,P}$ represents a hardware delay of a code of the i-th satellite, is corrected based on the navigation message and is known; and ($x_r$, $y_r$, $z_r$) represents a position of the terminal, $t_r$ represents a clock difference of a receiver, and ($x_r$, $y_r$, $z_r$) and $t_r$ are quantities to be calculated. The four equations are simultaneously combined to calculate the position of the terminal and the clock difference, thereby performing navigation, positioning and timing.

The terminal may perform precise positioning calculation of carrier measurement based on the Ka_N signal. The frequency of the Ka_N signal is more than 12 times of the frequency of the GNSS signal and the wavelength of the Ka_N signal is only about 1/12 of the wavelength of the GNSS signal, so that the precision of the precise positioning can be improved to reach a millimeter level. In a case of receiving the Ka_N signal and the Ka_C signal signal simultaneously, the power of the navigation signal can be effectively improved, and the measurement accuracy of the pseudo range and the carrier phase observation value can be improved.

Further, after receiving the Ka_N signal, the terminal may perform positioning based on the Ka_N signal, and may determine a posture parameter of the terminal. In the solution according to the embodiment of the present disclosure, the posture parameter of the terminal may be determined based on the Ka_N signal in multiple manners. Hereinafter, an ultra-short baseline posture measurement is taken as an example for description.

In an embodiment, the navigation method further includes: determining position information of each of antennas in an ultra-short baseline antenna system arranged on the terminal, and establishing a body coordinate system of the terminal based on the position information, wherein the ultra-short baseline antenna system comprises at least two antennas; determining a carrier phase observation equation based on second navigation signals received by the antennas from two of the satellites, and performing double difference calculation by using the carrier phase observation equation to determine a carrier phase double difference value, and a relationship between position vectors of the two satellites, a baseline vector between the antennas in the ultra-short baseline antenna system and a double-difference carrier integer ambiguity; obtaining a set of relational equations based on the second navigation signals transmitted by the at least four satellites and the relationship, calculating a double-difference carrier integer ambiguity in the relational equations by using a preset integer ambiguity resolution algorithm, calculating the baseline vector between the antennas in the ultra-short baseline antenna system by bringing the calculated double-difference carrier integer ambiguity into the relational equations; and calculating a posture parameter of the terminal based on the baseline vector. The posture parameter comprises a pitch angle, a yaw angle and a roll angle.

The Ka_N signal is still taken as an example for description. The Ka_N signal has a wavelength only about 1/12 of the wavelength of the GNSS signal and has a high carrier-to-noise ratio. Therefore, the ultra-short baseline posture measurement may be performed based on the Ka_N signal. An accuracy of 0.1m of the posture measurement based on the ultra-short baseline is equivalent to an accuracy of 1m or even 10m of the posture measurement based on the GNSS signal. The process of the ultra-short baseline posture measurement based on the Ka_N signal is briefly introduced below.

For example, as shown in Figure 3, in a case that a pair of ultra-short baseline antennas in a terminal are respectively located at a point O and a point P and the pair of ultra-short baseline antennas are fixed along a moving direction, a body coordinate system ENU is established with the point O as an origin. If the antennas at the point O and the point P may respectively receive a Ka_N signal from a satellite S1 and a Ka_N signal from a satellite S2, a carrier phase observation equation at the point O and the point P is obtained based on the received the Ka_N signals. Due to the double difference calculation to be performed, error terms may be ignored. The carrier phase observation equations are expressed as:

$$\begin{cases} \lambda_{Ka-N}^n \Phi_{O,S1} = |r_{O,S1}| + \lambda_{Ka-N}^n N_{O,S1} \\ \lambda_{Ka-N}^n \Phi_{P,S1} = |r_{P,S1}| + \lambda_{Ka-N}^n N_{P,S1} \\ \lambda_{Ka-N}^n \Phi_{O,S2} = |r_{O,S2}| + \lambda_{Ka-N}^n N_{O,S2} \\ \lambda_{Ka-N}^n \Phi_{P,S2} = |r_{P,S2}| + \lambda_{Ka-N}^n N_{P,S2} \end{cases}$$

.

where $\lambda_{Ka-N}^n$ represents a wavelength of the Ka_N signal, $\Phi_{O,S1}$ and $\Phi_{P,S1}$ represent carrier phase observation values of the satellite S1 respectively received at the point O and the point P, $\Phi_{O,S2}$ and $\Phi_{P,S2}$ represent carrier phase observation values of the satellite S2 respectively received at the point O and the point P, $r_{O,S1}$ represents a vector from the point O to the satellite S1, $r_{P,S1}$ represents a vector from the point P to the satellite S1, $r_{O,S2}$ represents a vector from the point O to the satellite S2, $r_{P,S2}$ represents a vector from the point P to the satellite S2, and $N_{O,S1}$, $N_{P,S1}$, $N_{O,S2}$, and $N_{P,S2}$ represent corresponding integer ambiguities.

The double difference calculation is performed on any one of the above carrier phase observation equations to eliminate the satellite clock difference, the orbit error, the ionosphere error, the troposphere error, the receiver clock difference, the hardware delay and the like, then the following equation is obtained:

$$\lambda_{Ka-N}^n \nabla \Phi_{S1S2,OP} \approx (s_1 - s_2) \cdot OP + \lambda_{Ka-N}^n \nabla N_{S1S2,OP}$$

.

where $\nabla \Phi_{S1S2,OP}$ represents a carrier phase double difference value, $s_1$ and $s_2$ respectively represent a position vector of the satellite S1 and a position vector of the satellite S2, $OP$ represents a baseline vector of the ultra-short baseline antenna, and $\nabla N_{S1S2,OP}$ represents a double-difference carrier integer ambiguity.

Further, in a case that the terminal may simultaneously receive second navigation signals from $N_{sat}$ satellites in the constellation where $N_{sat} \geq 4$, the following $N_{sat}-1$ equations may be obtained based on the above equation:

$$\begin{cases} \lambda_{Ka-N}^{n} \nabla \Phi_{S1S2,OP} \approx (s_1 - s_2) \cdot OP + \lambda_{Ka-N}^{n} \nabla N_{S1S2,OP} \\ \lambda_{Ka-N}^{n} \nabla \Phi_{S1S3,OP} \approx (s_1 - s_3) \cdot OP + \lambda_{Ka-N}^{n} \nabla N_{S1S3,OP} \\ \qquad\qquad \vdots \\ \lambda_{Ka-N}^{n} \nabla \Phi_{S1SN_{sat},OP} \approx (s_1 - s_{N_{sat}}) \cdot OP + \lambda_{Ka-N}^{n} \nabla N_{S1SN_{sat},OP} \end{cases}$$

The carrier integer ambiguity is calculated based on the above equations, and then the baseline vector $OP = [x_e\ x_n\ x_u]^T$ may be calculated. The process of calculating an ambiguity is similar to the precise single-point positioning process of the GNSS signal. Since a length $|OP|$ of a base is fixed and known, ambiguity fixing meets a baseline length constraint, the accuracy of the ambiguity fixing is improved, and then the pitch angle and the yaw angle are calculated based on the calculated baseline vector. The pitch angle and the yaw angle are calculated by using the following equations:

$$\begin{cases} \theta_P = arctan\left(\dfrac{x_u}{\sqrt{x_e^2 + x_n^2}}\right) \\ \varphi_B = arctan\left(\dfrac{x_n}{x_e}\right) \end{cases}$$

where $\theta_P$ represents the pitch angle, and $\varphi_B$ represents the yaw angle.

Further, in the solution according to the embodiment of the present disclosure, the roll angle is calculated by using another pair of ultra-short baseline antennas. That is, the roll angle, the yaw angle and the pitch angle may be calculated simultaneously by increasing the number of the ultra-short baseline antennas.

Further, in the solutions according to the embodiments of the present disclosure, the terminal may be a standard communication terminal, may be arranged on a moving object such as an aircraft or a ship, and may receive a Ka communication signaling signal, a communication service signal and a Ka_S signal, thereby realizing fast and continuous link establishment between a mobile terminal and a satellite and meeting the requirement of "communication in motion" without additional GNSS or inertial navigation assistance. The process of establishing a link between a terminal and a satellite includes the following steps 1 to 4.

In step 1, a standard communication terminal receives a signaling beam to initially establish a link with a satellite.

In step 2, the standard communication terminal receives a Ka_S signal to obtain ephemeris data of a low-orbit satellite, receives Ka_S signals from more than four satellites, and performs positioning and timing to obtain a position of a terminal antenna.

In step 3, an ultra-short baseline posture measurement is performed based on the Ka_S signals to obtain a posture of the terminal antenna.

In step 4, with movement of a terminal carrier, a direction of the communication terminal is adjusted based on the obtained the positions of the satellites, the position of the terminal and the posture of the terminal, an antenna service signal is received and transmitted, a link for a service signal is established, and a "communication in motion " service is maintained.

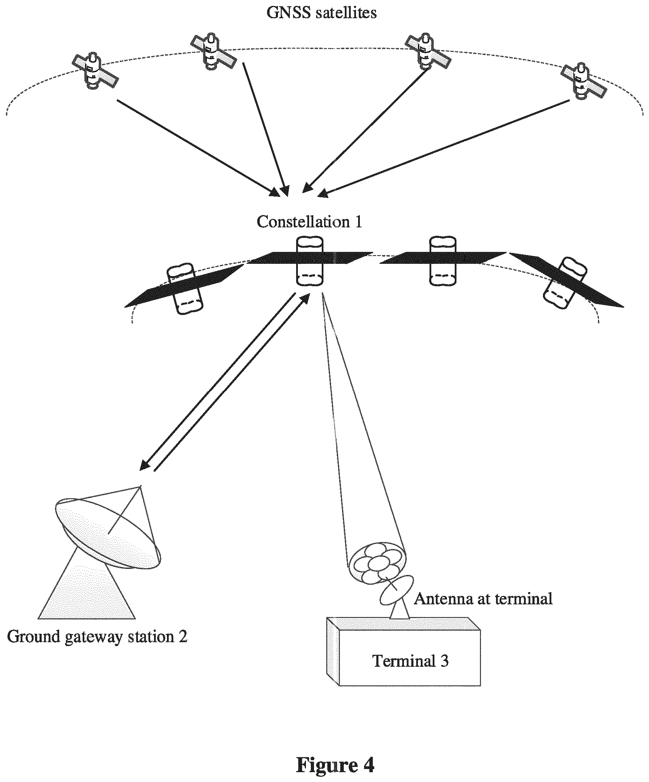

As shown in Figure 4, a navigation system based on a low-orbit broadband internet constellation is provided according to an embodiment of the present disclosure. The navigation system includes the constellation 1, a ground gateway station 2 and at least one terminal 3.

The ground gateway station 2 is configured to transmit a satellite navigation message to the constellation 1.

The constellation 1 includes multiple satellites operating in different orbits. The constellation 1 is configured to: receive the satellite navigation message or a GNSS signal transmitted by the ground gateway station, and generate a first navigation signal based on the navigation message or the GNSS signal; generate a first communication signal based on a preset communication payload, and generate a second navigation signal based on the first communication signal and the first navigation signal, where the second navigation signal and the first communication signal are transmitted by using shared spectrum resources and a shared transmission channel; and transmit the second navigation signal to at least one terminal 3 through a preset communication resource.

The at least one terminal 3 is configured to perform navigation and positioning based on the second navigation signal.

Further, in order to improve integration of the terminal, in an embodiment, each of the at least one terminal is provided with a communication antenna for a Ka-band signal or is provided with a communication antenna for a Ka-band signal and a navigation antenna for an L-band signal. The communication antenna for the Ka-band signal is configured to receive the second navigation signal.

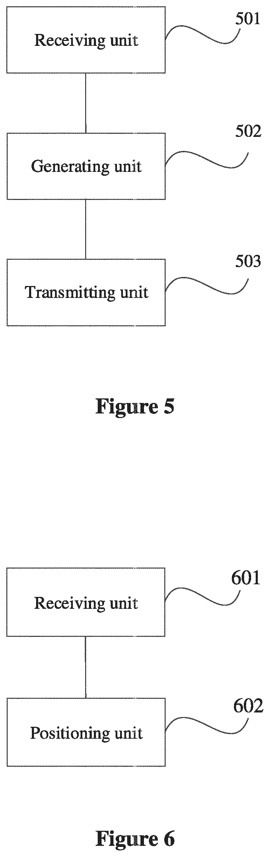

Based on the same inventive concept of the method shown in Figure 1, a navigation device based on a low-orbit broadband internet constellation is provided according to an embodiment of the present disclosure. As shown in Figure 5, the navigation device includes a receiving unit 501, a generating unit 502 and a transmitting unit 503.

The receiving unit 501 is configured to receive a satellite navigation message or a GNSS signal transmitted by the ground gateway station, and generate a first navigation signal based on the navigation message or the GNSS signal.

The generating unit 502 is configured to generate a first communication signal based on a preset communication payload, and generate a second navigation signal based on the first communication signal and the first navigation signal. The second navigation signal and the first communication signal are transmitted by using shared spectrum resources and a shared transmission channel.

The transmitting unit 503 is configured to transmit the second navigation signal to a terminal through a preset communication resource, so that the terminal performs navigation and positioning based on the second navigation signal.

In an embodiment, the first communication signal includes a service signal and a signaling signal, and the first communication signal includes a communication signal in Ka-band or a communication signal in Ku-band. The first navigation signal includes a continuous navigation signal in Ka-band and/or a continuous navigation signal in L-band.

In an embodiment, the generating unit 502 is configured to, in a case that both the first communication signal and the first navigation signal include a signal in Ka-band, obtain a baseband signal or an intermediate frequency signal based on the first navigation signal, and fuse the baseband signal or the intermediate frequency signal with the first communication signal to obtain the second navigation signal.

In an embodiment, the generating unit 502 is further configured to: receive a signal transmitted by the ground gateway station, determine a reception time instant and a transmission time instant of the signal, and determine a first signal propagation delay based on the reception time instant and the transmission time instant; transmit the first communication signal to the ground gateway station and receive a second signal propagation delay determined by the ground gateway station based on the first communication signal; determine clock difference information between the constellation and the ground gateway station based on the first signal propagation delay and the second signal propagation delay; and generate the second navigation signal based on the first communication signal and the clock difference information.

In an embodiment, the second navigation signal includes at least one of: a continuous navigation signal that is obtained by fusing the baseband signal or the intermediate frequency signal with a service signal and is represented as Ka_N; a continuous navigation signal that is obtained by fusing the baseband signal or the intermediate frequency signal with the signaling signal and is represented as Ka_S; the continuous navigation signal in L-band that is represented as L_N; a pulse navigation signal that is obtained by fusing the baseband signal or the intermediate frequency signal with a communication signal and is represented as Ka_P; and a second communication signal that is represented as Ka_C and carries the clock difference information.

In an embodiment, the transmitting unit 503 is configured to: transmit the Ka_P signal to the terminal through the communication resource in a multi-carousel manner; or code and group the Ka_N signal in a chip-level coding manner to obtain multiple chip groups, and transmit different chip groups to the terminal through different beams in the communication resource; or transmit the second navigation signal with continuous wide coverage to the terminal through a communication narrow beam.

Based on the same inventive concept of the method shown in Figure 1, a navigation device based on a low-orbit broadband internet constellation is provided according to an embodiment of the present disclosure. As shown in Figure 6, the navigation device includes a receiving unit 601 and a positioning unit 602.

The receiving unit 601 is configured to receive second navigation signals transmitted by at least four satellites in the constellation. Each of the second navigation signals and a first communication signal generated by a satellite corresponding to the second navigation signal based on a preset communication payload are transmitted by using shared spectrum resources and a shared transmission channel.

The positioning unit 602 is configured to: determine pseudo ranges between the satellites and a terminal, and carrier phase observation values of the satellites based on the second navigation signals; and perform positioning on the terminal based on the pseudo ranges and the carrier phase observation values.

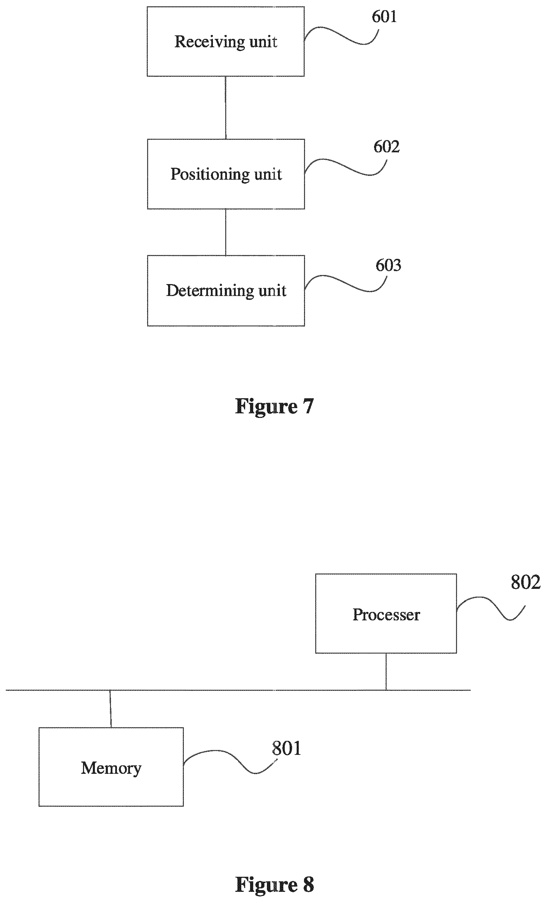

In an embodiment, as shown in Figure 7, the navigation device further includes a determining unit 603. The determining unit 603 is configured to: determine position information of each of antennas in an ultra-short baseline antenna system arranged on the terminal, and establish a body coordinate system of the terminal based on the position information, where the ultra-short baseline antenna system includes at least two antennas; determine a carrier phase observation equation based on second navigation signals received by the antennas from two of the satellites, and perform double difference calculation by using the carrier phase observation equation to determine a carrier phase double difference value, and a relationship between position vectors of the two satellites, a baseline vector between the antennas in the ultra-short baseline antenna system and a double-difference carrier integer ambiguity; obtain a set of relational equations based on the second navigation signals transmitted by the at least four satellites and the relationship, calculate a double-difference carrier integer ambiguity in the relational equations by using a preset integer ambiguity resolution algorithm, calculate the baseline vector between the antennas in the ultra-short baseline antenna system by bringing the calculated double-difference carrier integer ambiguity into the relational equations; and calculate a posture parameter of the terminal based on the baseline vector, where the posture parameter includes a pitch angle, a yaw angle and a roll angle.

As shown in Figure 8, a satellite is provided according to the present disclosure. The satellite includes a memory 801 and a processer 802. The memory 801 stores instructions executed by at least one processer. The processer 802 is configured to execute the instructions stored in the memory to perform the navigation method shown in Figure 1.

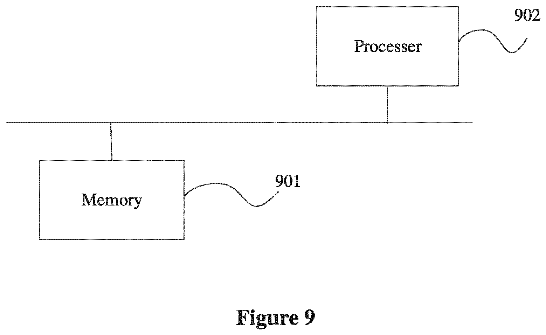

As shown in Figure 9, a terminal is provided according to the present disclosure. The satellite includes a memory 901 and a processer 902. The memory 901 stores instructions executed by at least one processer. The processer 902 is configured to execute the instructions stored in the memory to perform the navigation method shown in Figure 1.

A computer-readable storage medium is provided according to the present disclosure. The computer-readable storage medium stores computer instructions. The computer instructions, when executed on a computer, cause the computer to perform the method shown in Figure 1.

Those skilled in the art should understand that the embodiments of the present disclosure may be provided as a method, a system, or a computer program product. Therefore, the present disclosure may adopt the form of a complete hardware embodiment, a complete software embodiment, or an embodiment combining hardware and software. Moreover, the present disclosure may be implemented in a form of a computer program product that is implemented on one or more computer-usable storage media (including but not limited to a magnetic disk memory, an optical memory, and the like) that include computer-usable program code.

The present disclosure is described with reference to a flow chart and/or a block diagram of the method, the device (system), and the computer program product according to embodiments of the present disclosure. It should be understood that each flow and/or block of the flow charts and/or block diagrams and a combination of flows and/or blocks in the flow charts and/or block diagrams may be implemented by computer program instructions. The computer program instructions may be provided to a processor of a general computer, a special computer, an embedded processor or other programmable data processing device to generate a machine, so that instructions executed by the processor of the computer or other programmable data processing device generates an apparatus for implementing functions specified in one or more flows in the flow charts and/or one or more blocks in the block diagrams.

The computer program instructions may also be stored in a computer-readable memory which can guide the computer or other programmable data processing device to work in a specific way, such that the instructions stored in the computer-readable memory generate a product including an instruction apparatus, and the instruction apparatus implements functions specified in one or more flows in the flow charts and/or one or more blocks in the block diagrams.

The computer program instructions may also be payloaded on a computer or other programmable data processing device, so that a series of operation steps are performed on the computer or other programmable device to produce computer implemented processing. Thus, instructions executed on the computer or other programmable device provide steps for implementing the functions specified in one or more flows in the flow charts and/or one or more blocks in the block diagrams.

**Claims**

1. A navigation method based on a low-orbit broadband internet constellation, comprising:

   receiving a satellite navigation broadcast message or a precise message, which contains an orbit and a clock difference with high accuracies, an error at centimeter level and a long update period and is used for precise positioning calculation, transmitted by a ground gateway station, and generating a first navigation signal based on the satellite navigation broadcast message or the precise message (S101);
   generating a first communication signal based on a preset communication payload, and generating a second navigation signal based on the first communication signal and the first navigation signal, wherein the second navigation signal and the first communication signal are transmitted by using shared spectrum resources and a shared transmission channel (S102); and
   transmitting the second navigation signal to a terminal through a preset communication resource, wherein the terminal performs positioning, navigation and timing based on the second navigation signal (S103);
   wherein the navigation method based on a low-orbit broadband internet constellation is **characterized in that** the generating a second navigation signal based on the first communication signal and the first navigation signal further comprises:

receiving a signal transmitted by the ground gateway station, determining a reception time instant and a transmission time instant of the signal, and determining a first signal propagation delay based on the reception time instant and the transmission time instant;

transmitting the first communication signal to the ground gateway station, and receiving a second signal propagation delay determined by the ground gateway station based on the first communication signal;

determining clock difference information between the constellation and the ground gateway station based on the first signal propagation delay and the second signal propagation delay; and

generating the second navigation signal based on the first communication signal and the clock difference information.

2. The navigation method according to claim 1, wherein the first communication signal comprises a service signal and a signaling signal, the first communication signal comprises a Ka-band communication signal or a Ku-band communication signal, and the first navigation signal comprises a continuous Ka-band navigation signal and/or a continuous L-band navigation signal.

3. The navigation method according to claim 2, wherein in a case that both the first communication signal and the first navigation signal comprise a Ka-band signal, the generating a second navigation signal based on the first communication signal and the first navigation signal comprises:

obtaining a baseband signal or an intermediate frequency signal based on the first navigation signal; and

fusing the baseband signal or the intermediate frequency signal with the first communication signal to obtain the second navigation signal.

4. The navigation method according to claim 1, wherein the second navigation signal comprises at least one of:

a continuous navigation signal, obtained by fusing the baseband signal or the intermediate frequency signal with the service signal and represented as Ka_N;

a continuous navigation signal, obtained by fusing the baseband signal or the intermediate frequency signal with the signaling signal and represented as Ka_S;

the continuous L-band navigation signal, represented as L_N;

a pulse navigation signal, obtained by fusing the baseband signal or the intermediate frequency signal with a communication signal and represented as Ka_P; and

a second communication signal, represented as Ka_C and carrying the clock difference information.

5. The navigation method according to claim 4, wherein the transmitting the second navigation signal to a terminal through a preset communication resource comprises:

transmitting the Ka_P to the terminal through the communication resource in a multi-carousel manner; or

coding and grouping the Ka_N in a chip-level coding manner to obtain a plurality of chip groups, and transmitting different chip groups to the terminal through different beams in the communication resource; or

transmitting the second navigation signal with continuous wide coverage to the terminal through a communication narrow beam.

6. A navigation method based on a low-orbit broadband internet constellation, comprising:

receiving second navigation signals transmitted by at least four satellites in the constellation (S201), wherein each of the second navigation signals and a first communication signal generated by a satellite corresponding to the second navigation signal based on a preset communication payload are transmitted by using shared spectrum resources and a shared transmission channel;

determining pseudo ranges between the satellites and a terminal, and carrier phase observation values of the satellites based on the second navigation signals, and performing positioning, navigation and timing on the terminal based on the pseudo ranges and the carrier phase observation values (S202); and

the navigation method based on a low-orbit broadband internet constellation is **characterized by**:

determining position information of each of the antennas in an ultra-short baseline antenna system arranged on the terminal, and establishing a body coordinate system of the terminal based on the position information, wherein the ultra-short baseline antenna system comprises at least two antennas;

determining a carrier phase observation equation based on second navigation signals received by the antennas from two of the satellites, and performing double difference calculation, which allows to ignore error terms,

by using the carrier phase observation equation to determine a carrier phase double difference value, and a relationship between position vectors of the two satellites, a baseline vector between the antennas in the ultra-short baseline antenna system and a double-difference carrier integer ambiguity;

obtaining a set of relational equations based on the second navigation signals transmitted by the at least four satellites and the relationship, calculating a double-difference carrier integer ambiguity in the relational equations by using a preset integer ambiguity resolution algorithm, calculating the baseline vector between the antennas in the ultra-short baseline antenna system by bringing the calculated double-difference carrier integer ambiguity into the relational equations; and

calculating a posture parameter of the terminal based on the baseline vector, wherein the posture parameter comprises a pitch angle, a yaw angle and a roll angle.

7.  A navigation system based on a low-orbit broadband internet constellation, comprising the constellation (1), a ground gateway station (2) and at least one terminal (3), wherein

the ground gateway station (2) is configured to transmit a satellite navigation broadcast message or a precise ephemeris to the constellation (1);
the constellation (1) comprises a plurality of satellites operating in different orbits, and is configured to:

receive the satellite navigation broadcast message or the precise ephemeris transmitted by the ground gateway station (2), and generate a first navigation signal based on the satellite navigation broadcast message or the precise ephemeris ;

generate a first communication signal based on a preset communication payload, and generate a second navigation signal based on the first communication signal and the first navigation signal, wherein the second navigation signal and the first communication signal are transmitted by using shared spectrum resources and a shared transmission channel; and

transmit the second navigation signal to the at least one terminal (3) through a preset communication resource; and

the at least one terminal (3) is configured to perform positioning, navigation and timing based on the second navigation signal;
wherein the navigation system based on a low-orbit broadband internet constellation is **characterized in that** the second navigation signal is generated based on the first communication signal and the first navigation signal by:

receiving a signal transmitted by the ground gateway station (2), determining a reception time instant and a transmission time instant of the signal, and determining a first signal propagation delay based on the reception time instant and the transmission time instant;

transmitting the first communication signal to the ground gateway station (2), and receiving a second signal propagation delay determined by the ground gateway station (2) based on the first communication signal;

determining clock difference information between the constellation (1) and the ground gateway station (2) based on the first signal propagation delay and the second signal propagation delay; and

generating the second navigation signal based on the first communication signal and the clock difference information.

8.  The navigation system according to claim 7, wherein each of the at least one terminal (3) is arranged with a communication antenna for a Ka-band signal or is arranged with a communication antenna for a Ka-band signal and a navigation antenna for an L-band signal, wherein the communication antenna for the Ka-band signal is configured to receive the second navigation signal.

**Patentansprüche**

1.  Navigationsverfahren auf der Grundlage einer breitbandigen Internetkonstellation mit niedriger Orbitrate, umfassend:

Empfangen einer Satellitennavigations-Rundfunknachricht oder einer präzisen Nachricht, die eine Umlaufbahn und eine Taktdifferenz mit hohen Genauigkeiten, einen Fehler auf Zentimeterebene und eine lange Aktualisierungsperiode enthält und für eine präzise Positionsberechnung verwendet wird, die von einer Boden-Gateway-Station übertragen wird, und Erzeugen eines ersten Navigationssignals auf der Grundlage der Satellitennavigations-Rundfunknachricht oder der präzisen Nachricht (S101);

Erzeugen eines ersten Kommunikationssignals auf der Grundlage einer voreingestellten Kommunikationsnutzlast und Erzeugen eines zweiten Navigationssignals auf der Grundlage des ersten Kommunikationssignals und des ersten Navigationssignals, wobei das zweite Navigationssignal und das erste Kommunikationssignal unter Verwendung gemeinsam genutzter Frequenzressourcen und eines gemeinsam genutzten Übertragungskanals (S102) übertragen werden; und

Übertragen des zweiten Navigationssignals an ein Endgerät über eine voreingestellte Kommunikationsressource, wobei das Endgerät die Positionierung, Navigation und Zeitsteuerung auf der Grundlage des zweiten Navigationssignals durchführt (S103);

wobei das Navigationsverfahren auf der Grundlage einer einer breitbandigen Internetkonstellation mit niedriger Orbitrate **dadurch gekennzeichnet ist, dass** das Erzeugen eines zweiten Navigationssignals auf der Grundlage des ersten Kommunikationssignals und des ersten Navigationssignals weiter Folgendes umfasst:

Empfangen eines von der Boden-Gateway-Station übertragenen Signals, Bestimmen eines Empfangszeitpunkts und eines Übertragungszeitpunkts des Signals, und Bestimmen einer ersten Signalausbreitungsverzögerung auf der Grundlage des Empfangszeitpunkts und des Übertragungszeitpunkts;

Übertragen des ersten Kommunikationssignals an die Boden-Gateway-Station und Empfangen einer zweiten Signalausbreitungsverzögerung, die von der Boden-Gateway-Station auf der Grundlage des ersten Kommunikationssignals bestimmt wird;

Bestimmen von Taktdifferenzinformationen zwischen der Konstellation und der Boden-Gateway-Station basierend auf der ersten Signalausbreitungsverzögerung und der zweiten Signalausbreitungsverzögerung; und

Erzeugen des zweiten Navigationssignals auf der Grundlage des ersten Kommunikationssignals und der Taktdifferenzinformationen.

2. Navigationsverfahren nach Anspruch 1, wobei das erste Kommunikationssignal ein Dienstsignal und ein Signalisierungssignal umfasst, das erste Kommunikationssignal ein Ka-Band-Kommunikationssignal oder ein Ku-Band-Kommunikationssignal umfasst, und das erste Navigationssignal ein kontinuierliches Ka-Band-Navigationssignal und/oder ein kontinuierliches L-Band-Navigationssignal umfasst.

3. Navigationsverfahren nach Anspruch 2, wobei in einem Fall, in dem sowohl das erste Kommunikationssignal als auch das erste Navigationssignal ein Ka-Band-Signal umfassen, das Erzeugen eines zweiten Navigationssignals auf der Grundlage des ersten Kommunikationssignals und des ersten Navigationssignals Folgendes umfasst:

Erhalten eines Basisbandsignals oder eines Zwischenfrequenzsignals auf der Grundlage des ersten Navigationssignals; und

Zusammenführen des Basisbandsignals oder des Zwischenfrequenzsignals mit dem ersten Kommunikationssignal, um das zweite Navigationssignal zu erhalten.

4. Navigationsverfahren nach Anspruch 1, wobei das zweite Navigationssignal mindestens eines von Folgendem umfasst:

ein kontinuierliches Navigationssignal, das durch Zusammenführen des Basisbandsignals oder des Zwischenfrequenzsignals mit dem Dienstsignal erhalten und als Ka_N dargestellt wird;

ein kontinuierliches Navigationssignal, das durch Zusammenführen des Basisbandsignals oder des Zwischenfrequenzsignals mit dem Signalisierungssignal erhalten und als Ka_S dargestellt wird;

das kontinuierliche L-Band-Navigationssignal, das als L_N dargestellt wird;

ein Impulsnavigationssignal, das durch Zusammenführen des Basisbandsignals oder des Zwischenfrequenzsignals mit einem Kommunikationssignal erhalten und als Ka_P dargestellt wird; und

ein zweites Kommunikationssignal, das als Ka_C dargestellt wird und die Taktdifferenzinformation trägt.

5. Navigationsverfahren nach Anspruch 4, wobei das Übertragen des zweiten Navigationssignals an ein Endgerät über eine voreingestellte Kommunikationsressource Folgendes umfasst:

Übertragen des Ka_P an das Endgerät über die Kommunikationsressource in einer Multikarussellweise; oder

Kodieren und Gruppieren der Ka_N auf Chipebene, um eine Vielzahl von Chipgruppen zu erhalten, und Übertragen verschiedener Chipgruppen an das Endgerät über verschiedene Strahlen in der Kommunikationsressource; oder

Übertragen des zweiten Navigationssignals mit kontinuierlicher breiter Abdeckung an das Endgerät durch einen schmalen Kommunikationsstrahl.

6. Navigationsverfahren auf der Grundlage einer breitbandigen Internetkonstellation mit niedriger Orbitrate, umfassend:

Empfangen von zweiten Navigationssignalen, die von mindestens vier Satelliten in der Konstellation (S201) übertragen werden, wobei jedes der zweiten Navigationssignale und ein erstes Kommunikationssignal, das von einem dem zweiten Navigationssignal entsprechenden Satelliten auf der Grundlage einer voreingestellten Kommunikationsnutzlast erzeugt wird, unter Verwendung gemeinsam genutzter Frequenzressourcen und eines gemeinsam genutzten Übertragungskanals übertragen werden;

Bestimmen von Pseudoentfernungen zwischen den Satelliten und einem Endgerät und von Trägerphasenbeobachtungswerten der Satelliten auf der Grundlage der zweiten Navigationssignale, und Durchführen von Positionierung, Navigation und Zeitsteuerung auf dem Endgerät auf der Grundlage der Pseudoentfernungen und der Trägerphasenbeobachtungswerte (S202); und

das Navigationsverfahren auf der Grundlage einer breitbandigen Internetkonstellation mit niedriger Orbitrate durch Folgendes gekennzeichnet ist:

Bestimmen von Positionsinformationen jeder der Antennen in einem Ultrakurzbasisantennensystem, das auf dem Endgerät angeordnet ist, und Festlegen eines Körperkoordinatensystems des Endgeräts auf der Grundlage der Positionsinformationen, wobei das Ultrakurzbasisantennensystem mindestens zwei Antennen umfasst;

Bestimmen einer Trägerphasenbeobachtungsgleichung auf der Grundlage von zweiten Navigationssignalen, die von den Antennen von zwei der Satelliten empfangen werden, und Durchführen einer Doppeldifferenzberechnung, die es ermöglicht, Fehlerterme zu ignorieren,

indem die Trägerphasenbeobachtungsgleichung verwendet wird, um einen Trägerphasendoppeldifferenzwert und eine Beziehung zwischen Positionsvektoren der beiden Satelliten, einem Basisvektor zwischen den Antennen in dem Ultrakurzbasisantennensystem und einer ganzzahligen Doppeldifferenzträgerambiguität zu bestimmen;

Erhalten eines Satzes von Beziehungsgleichungen auf der Grundlage der zweiten Navigationssignale, die von den mindestens vier Satelliten übertragen werden, und der Beziehung,

Berechnen einer ganzzahligen Doppeldifferenzträgerambiguität in den Beziehungsgleichungen unter Verwendung eines voreingestellten Algorithmus zur Auflösung ganzzahliger Ambiguitäten,

Berechnen des Basisvektors zwischen den Antennen in dem Ultrakurzbasisantennensystem durch Einbringen der berechneten ganzzahligen Doppeldifferenzträgerambiguität in die Beziehungsgleichungen; und

Berechnen eines Positionsparameters des Endgeräts auf der Grundlage des Basisvektors, wobei der Positionsparameter einen Nickwinkel, einen Gierwinkel und einen Rollwinkel umfasst.

7. Navigationssystem auf der Grundlage einer breitbandigen Internetkonstellation mit niedriger Orbitrate, das die Konstellation (1), eine Boden-Gateway-Station (2) und mindestens ein Endgerät (3) umfasst, wobei

die Boden-Gateway-Station (2) so konfiguriert ist, dass sie eine Satellitennavigations-Rundnachricht oder eine präzise Ephemeride an die Konstellation (1) überträgt;

die Konstellation (1) eine Vielzahl von Satelliten umfasst, die in verschiedenen Umlaufbahnen arbeiten, und zu Folgendem konfiguriert ist:

Empfangen der von der Boden-Gateway-Station (2) übertragenen Satellitennavigations-Rundmeldung oder der präzisen Ephemeriden, und Erzeugen eines ersten Navigationssignals auf der Grundlage der Satellitennavigations-Rundmeldung oder der präzisen Ephemeriden;

Erzeugen eines ersten Kommunikationssignals auf der Grundlage einer voreingestellten Kommunikationsnutzlast und Erzeugen eines zweiten Navigationssignals auf der Grundlage des ersten Kommunikationssignals und des ersten Navigationssignals, wobei das zweite Navigationssignal und das erste Kommunikationssignal unter Verwendung gemeinsam genutzter Frequenzressourcen und eines gemeinsam genutzten Übertragungskanals übertragen werden; und

Übertragen des zweiten Navigationssignals an das mindestens eine Endgerät (3) über eine voreingestellte Kommunikationsressource; und

wobei das mindestens eine Endgerät (3) so konfiguriert ist, dass es Positionierung, Navigation und Zeitsteuerung auf der Grundlage des zweiten Navigationssignals durchführt;
wobei das Navigationssystem auf der Grundlage einer breitbandigen Internetkonstellation mit niedriger Orbitrate **dadurch gekennzeichnet ist, dass** das zweite Navigationssignal auf der Grundlage des ersten Kommunikationssignals und des ersten Navigationssignals durch Folgendes erzeugt wird:

Empfangen eines von der Boden-Gateway-Station (2) übertragenen Signals, Bestimmen eines Empfangszeitpunkts und eines Übertragungszeitpunkts des Signals, und Bestimmen einer ersten Signalausbreitungsverzögerung auf der Grundlage des Empfangszeitpunkts und des Übertragungszeitpunkts;
Übertragen des ersten Kommunikationssignals an die Boden-Gateway-Station (2) und Empfangen einer zweiten Signalausbreitungsverzögerung, die von der Boden-Gateway-Station (2) auf der Grundlage des ersten Kommunikationssignals bestimmt wird;
Bestimmen von Taktdifferenzinformationen zwischen der Konstellation (1) und der Boden-Gateway-Station (2) basierend auf der ersten Signalausbreitungsverzögerung und der zweiten Signalausbreitungsverzögerung; und
Erzeugen des zweiten Navigationssignals auf der Grundlage des ersten Kommunikationssignals und der Taktdifferenzinformation.

8. Navigationssystem nach Anspruch 7, wobei jedes des mindestens einen Endgeräts (3) mit einer Kommunikationsantenne für ein Ka-Band-Signal ausgebildet ist oder mit einer Kommunikationsantenne für ein Ka-Band-Signal und einer Navigationsantenne für ein L-Band-Signal ausgebildet ist, wobei die Kommunikationsantenne für das Ka-Band-Signal zum Empfang des zweiten Navigationssignals konfiguriert ist.

**Revendications**

1. Procédé de navigation sur la base d'une constellation Internet à large bande à orbite basse, comprenant :

la réception d'un message de diffusion de navigation satellite ou d'un message précis, qui contient une orbite et une différence d'horloge avec une précision élevée, une erreur au niveau centimétrique et une longue période de mise à jour, et est utilisé pour le calcul de positionnement précis, transmis par une station passerelle au sol, et la génération d'un premier signal de navigation sur la base du message de diffusion de navigation satellite ou du message précis (S101) ;
la génération d'un premier signal de communication sur la base d'une charge utile de communication prédéfinie, et la génération d'un deuxième signal de navigation sur la base du premier signal de communication et du premier signal de navigation, dans lequel le deuxième signal de navigation et le premier signal de communication sont transmis en utilisant des ressources de spectre partagé et un canal de transmission partagé (S102) ; et
la transmission du deuxième signal de navigation vers un terminal par l'intermédiaire d'une ressource de communication prédéfinie, dans lequel le terminal effectue le positionnement, la navigation et la temporisation sur la base du deuxième signal de navigation (S103) ;
dans lequel le procédé de navigation sur la base d'une constellation Internet à large bande à orbite basse est **caractérisé en ce que** la génération d'un deuxième signal de navigation sur la base du premier signal de communication et du premier signal de navigation comprend en outre :

la réception d'un signal transmis par la station passerelle au sol, la détermination d'un instant de réception et d'un instant de transmission du signal, et la détermination d'un premier retard de propagation de signal sur la base de l'instant de réception et de l'instant de transmission ;
la transmission du premier signal de communication à la station passerelle au sol, et la réception d'un deuxième retard de propagation de signal déterminé par la station de passerelle au sol sur la base du premier signal de communication ;
la détermination d'informations de différence d'horloge entre la constellation et la station de passerelle au sol sur la base du premier retard de propagation de signal et du deuxième retard de propagation de signal ; et
la génération du deuxième signal de navigation sur la base du premier signal de communication et des informations de différence d'horloge.

**2.** Procédé de navigation selon la revendication 1, dans lequel le premier signal de communication comprend un signal de service et un signal de signalisation, le premier signal de communication comprend un signal de communication dans la bande Ka ou un signal de communication dans la bande Ku, et le premier signal de navigation comprend un signal de navigation dans la bande Ka et/ou un signal de navigation dans la bande L.

**3.** Procédé de navigation selon la revendication 2, dans lequel, dans un cas où le premier signal de communication et le premier signal de navigation comprennent tous deux un signal dans la bande Ka, la génération d'un deuxième signal de navigation sur la base du premier signal de communication et du premier signal de navigation comprend :

l'obtention d'un signal de bande de base ou d'un signal de fréquence intermédiaire sur la base du premier signal de navigation ; et

la fusion du signal de bande de base ou du signal de fréquence intermédiaire avec le premier signal de communication pour obtenir le deuxième signal de navigation.

**4.** Procédé de navigation selon la revendication 1, dans lequel le deuxième signal de navigation comprend au moins l'un des éléments suivants :

un signal de navigation continu, obtenu par fusion du signal de bande de base ou du signal de fréquence intermédiaire avec le signal de service et représenté par Ka_N ;

un signal de navigation continu, obtenu par fusion du signal de bande de base ou du signal de fréquence intermédiaire avec le signal de signalisation et représenté par Ka_S ;

le signal de navigation continu dans la bande L, représenté par L_N ;

un signal de navigation d'impulsion, obtenu par fusion du signal de bande de base ou du signal de fréquence intermédiaire avec un signal de communication et représenté par Ka_P ; et

un deuxième signal de communication, représenté par Ka_C et transportant les informations de différence d'horloge.

**5.** Procédé de navigation selon la revendication 4, dans lequel la transmission du deuxième signal de navigation vers un terminal par l'intermédiaire d'une ressource de communication prédéfinie comprend :

la transmission du Ka_P vers le terminal par l'intermédiaire de la ressource de communication d'une manière multicarrousel ; ou

le codage et le regroupement du Ka_N d'une manière de codage au niveau puce pour obtenir une pluralité de groupes de puces, et la transmission de différents groupes de puces vers le terminal par l'intermédiaire de différents faisceaux dans la ressource de communication ; ou

la transmission du deuxième signal de navigation avec une couverture large continue vers le terminal par l'intermédiaire d'un faisceau de communication étroit.

**6.** Procédé de navigation sur la base d'une constellation Internet à large bande à orbite basse, comprenant :

la réception de deuxièmes signaux de navigation transmis par au moins quatre satellites dans la constellation (S201), dans lequel chacun des deuxièmes signaux de navigation et un premier signal de communication généré par un satellite correspondant au deuxième signal de navigation sur la base d'une charge utile de communication prédéfinie sont transmis en utilisant des ressources de spectre partagé et un canal de transmission partagé ;

la détermination de pseudo-plages entre les satellites et un terminal, et de valeurs d'observation de phase porteuse des satellites sur la base des deuxièmes signaux de navigation, et le fait d'effectuer le positionnement, la navigation et la temporisation sur le terminal sur la base des pseudo-plages et des valeurs d'observation de phase porteuse (S202) ; et

le procédé de navigation sur la base d'une constellation Internet à large bande à orbite basse est **caractérisé par** :

la détermination d'informations de position de chacune des antennes dans un système d'antenne de ligne de base ultra-courte agencé sur le terminal, et l'établissement d'un système de coordonnées de corps du terminal sur la base des informations de position, dans lequel le système d'antenne de ligne de base ultra-courte comprend au moins deux antennes ;

la détermination d'une équation d'observation de phase porteuse sur la base de deuxièmes signaux de navigation reçus par les antennes provenant de deux des satellites, et le fait d'effectuer un calcul de double différence, qui permet d'ignorer des termes d'erreur,

en utilisant l'équation d'observation de phase porteuse pour déterminer une valeur de double différence de phase porteuse, et une relation entre des vecteurs de position des deux satellites, un vecteur de ligne de base entre les antennes dans le système d'antenne de ligne de base ultra-courte et une ambiguïté d'intégrité de porteuse de double différence ;

l'obtention d'un ensemble d'équations relationnelles sur la base des deuxièmes signaux de navigation transmis par les au moins quatre satellites et de la relation,

le calcul d'une ambiguïté d'intégrité de porteuse de double différence dans les équations relationnelles en utilisant un algorithme de résolution d'ambiguïté d'intégrité prédéfini, le calcul du vecteur de ligne de base entre les antennes dans le système d'antenne de ligne de base ultra-courte en introduisant l'ambiguïté d'intégrité de porteuse de double différence calculée dans les équations relationnelles ; et

le calcul d'un paramètre de posture du terminal sur la base du vecteur de ligne de base, dans lequel le paramètre de posture comprend un angle de tangage, un angle de lacet et un angle de roulis.

7. Système de navigation sur la base d'une constellation Internet à large bande à orbite basse, comprenant la constellation (1), une station passerelle au sol (2) et au moins un terminal (3), dans lequel

la station passerelle au sol (2) est configurée pour transmettre un message de diffusion de navigation satellite ou une éphéméride précise vers la constellation (1) ;

la constellation (1) comprend une pluralité de satellites opérant dans différentes orbites, et est configurée pour :

recevoir le message de diffusion de navigation satellite ou l'éphéméride précise transmise par la station passerelle au sol (2), et générer un premier signal de navigation sur la base du message de diffusion de navigation satellite ou de l'éphéméride précise ;

générer un premier signal de communication sur la base d'une charge utile de communication prédéfinie, et générer un deuxième signal de navigation sur la base du premier signal de communication et du premier signal de navigation, dans lequel le deuxième signal de navigation et le premier signal de communication sont transmis en utilisant des ressources de spectre partagé et un canal de transmission partagé ; et transmettre le deuxième signal de navigation à l'au moins un terminal (3) par l'intermédiaire d'une ressource de communication prédéfinie ; et l'au moins un terminal (3) est configuré pour effectuer le positionnement, la navigation et la temporisation sur la base du deuxième signal de navigation ;

dans lequel le système de navigation sur la base d'une constellation Internet à large bande à orbite basse est **caractérisé en ce que** le deuxième signal de navigation est généré sur la base du premier signal de communication et du premier signal de navigation par :

la réception d'un signal transmis par la station passerelle au sol (2), la détermination d'un instant de réception et d'un instant de transmission du signal, et la détermination d'un premier retard de propagation de signal sur la base de l'instant de réception et de l'instant de transmission ;

la transmission du premier signal de communication à la station passerelle au sol (2), et la réception d'un deuxième retard de propagation de signal déterminé par la station de passerelle au sol (2) sur la base du premier signal de communication ;

la détermination d'informations de différence d'horloge entre la constellation (1) et la station de passerelle au sol (2) sur la base du premier retard de propagation de signal et du deuxième retard de propagation de signal ; et

la génération du deuxième signal de navigation sur la base du premier signal de communication et des informations de différence d'horloge.

8. Système de navigation selon la revendication 7, dans lequel chacun de l'au moins un terminal (3) est agencé avec une antenne de communication pour un signal dans la bande Ka ou est agencé avec une antenne de communication pour un signal dans la bande Ka et une antenne de navigation pour un signal dans la bande L, dans lequel l'antenne de communication pour le signal dans la bande Ka est configurée pour recevoir le deuxième signal de navigation.

| Ground gateway station | Constellation | Terminal |
|---|---|---|

Transmit a satellite navigation message →

Receive a satellite navigation broadcast message or a precise message transmitted by the ground gateway station, and generate a first navigation signal based on the navigation message or the precise message — S101

Generate a first communication signal based on a preset communication payload, generate a second navigation signal based on the first communication signal and the first navigation signal, where the second navigation signal and the first communication signal share spectrum resources and are transmitted through a transmission channel — S102

S103
Transmit the second navigation signal to the terminal through a preset communication resource →

S201 — Receive second navigation signals transmitted by at least four satellites in the constellation

S202 — Determine pseudo ranges between the satellites and the terminal, and carrier phase observation values of the satellites based on the second navigation signals, and perform positioning, navigation and timing on the terminal based on the pseudo ranges and the carrier phase observation values

**Figure 1**

**Figure 2**

**Figure 3**

GNSS satellites

Constellation 1

Ground gateway station 2

Antenna at terminal

Terminal 3

**Figure 4**

Receiving unit — 501

Generating unit — 502

Transmitting unit — 503

**Figure 5**

Receiving unit — 601

Positioning unit — 602

**Figure 6**

**Figure 7**

**Figure 8**

902

Processer

901

Memory

**Figure 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010566922
- EP 3805796 A1
- CN 109061675 A